# EUROPÄISCHE PATENTSCHRIFT

(11) **EP 4 371 705 B1**
(45) Veröffentlichungstag und Bekanntmachung des Hinweises auf die Patenterteilung: **03.09.2025**
(21) Anmeldenummer: 22207537.6
(22) Anmeldetag: 15.11.2022
(51) Int. Cl.: B25B 7/16, B25B 27/14, H01R 43/042

(54) **VERFAHREN ZUR MONTAGE EINER ZANGENBETÄTIGUNGSBAUGRUPPE, ZANGENBETÄTIGUNGSBAUGRUPPE UND ZANGE**
METHOD OF ASSEMBLING A TONG ACTUATING ASSEMBLY, TONG ACTUATING ASSEMBLY AND PLIERS
PROCÉDÉ D'ASSEMBLAGE D'UN ENSEMBLE D'ACTIONNEMENT DE PINCE, ENSEMBLE D'ACTIONNEMENT DE PINCE ET PINCE

(43) Veröffentlichungstag der Anmeldung: 22.05.2024
(73) Patentinhaber: WEZAG GmbH & Co. KG, 35260 Stadtallendorf (DE)
(72) Erfinder: Gebhard, Gunthard, 35287 Amöneburg (DE)
(74) Vertreter: REHBERG HÜPPE + PARTNER

(56) Entgegenhaltungen:
- EP-A1- 3 834 989
- EP-A2- 0 303 889
- EP-A2- 2 463 969
- DE-C1- 10 056 900

## Beschreibung

### TECHNISCHES GEBIET DER ERFINDUNG

Die Erfindung betrifft eine Zange, die von einem Benutzer mit der Hand gehalten und geführt werden kann und manuell betätigt wird durch Aufbringung von Kräften durch einen Benutzer auf Handhebel der Zange.

Für die Ausgestaltung der Zange gibt es die folgenden Varianten:
a) Möglich ist, dass die Zange eine Crimpzange ist, welche insbesondere einer Herstellung einer dauerhaften mechanischen Verbindung und elektrischen Kontaktierung dient. Dies erfolgt vorzugsweise durch Vercrimpen eines Steckers mit einem Kabel oder einem elektrischen Leiter beliebiger Bauart. Je nach zum Einsatz kommendem Profil der Gesenke können unterschiedliche Crimpvorgänge mit der Crimpzange oder der Crimpmaschine ausgeführt werden. Beispielsweise kann es sich um einen geschlossenen Crimp handeln, bei dem der Leiter in eine geschlossene Crimpzone eines Steckers oder in eine geschlossene Hülse eingeführt wird und durch plastische Verformung der Crimpzone oder der Hülse vercrimpt wird. Möglich ist aber auch, dass ein offener Crimp erzeugt wird, bei dem der Stecker eine offene Crimpzone aufweist, in die der Leiter von oben eingelegt werden kann. Um lediglich einige, die Erfindung nicht beschränkende Beispiele zu nennen, können mit der hier einschlägigen Crimpzange Werkstücke wie
   - Kabelschuhe nach DIN 4623,
   - Aluminiumverbinder nach DIN 46329
   - Aluminium-Presskabelschuhe nach DIN 48201
   - Quetschkabelschuhe nach DIN 46234,
   - Stiftkabelschuhe nach DIN 46230 oder
   - Verbinder, Stecker oder Kabelschuhe für eine Verbindung mit einem Kabel oder Leiter, wie diese in dem Produktkatalog der WEZAG GmbH Werkzeugfabrik "Werkzeuge für die professionelle Anwendung" mit der Veröffentlichungs-Nr. 10/11 beschrieben sind,
      vercrimpt werden. Bei dem hergestellten Crimp kann es sich beispielsweise für einen geschlossenen Crimp, um einen Sechskant- oder Hexagonalcrimp, einen Vierkantcrimp, einen B-Crimp, einen Trapezcrimp, einen modifizierten Trapezcrimp, einen Ovalcrimp, einen Dorncrimp oder einen Zweidorncrimp handeln. Ein offener Crimp kann bspw. als V-Crimp oder B-Crimp, als Rollcrimp oder als Doppelrollcrimp ausgebildet sein.
      Zusätzlich zur Herstellung der elektrischen Verbindung zwischen Kabel oder Leiter und Stecker kann eine mechanische Verbindung mittels eines sogenannten Isolationscrimps hergestellt werden. Hierbei kann ein geschlossener Isolationscrimp oder ein offener Isolationscrimp (insbesondere V-Crimp oder B-Crimp, O-Crimp oder OV-Crimp) Einsatz finden. Hinsichtlich weiterer Informationen
   - zur Ausgestaltung einer Crimpzange,
   - zu möglichen Einsatzbereichen der Crimpzange und/oder
   - zu unterschiedlichen möglichen Typen von Crimpverbindungen, welche mittels der Crimpzange hergestellt werden können,
      wird auf das Werk
   - "Crimptechnik, Herstellung prozesssicherer Verbindungen von elektrischen Leitern und Steckern" der WEZAG GmbH Werkzeugfabrik, Die Bibliothek der Technik 342, Verlag Moderne Industrie, ISBN 978-3-68236-027-7
   verwiesen. Crimpzangen in unterschiedlichen Bauformen sind beispielsweise aus den Druckschriften DE 37 08 727 C2, DE 197 13 580 C2, DE 197 53 436 C2, DE 198 02 287 C1, DE 198 07 737 C2, EP 3 208 044 A1 und EP 2 305 428 A1 bekannt.
b) Möglich ist auch, dass die Zange eine Rohrpresszange ist, die der Herstellung einer mechanischen fluiddichten Verbindung in der Fluidtechnik dient, beispielsweise zur Verbindung von Rohren miteinander oder mit fluidischen Anschlusssteckern. Hierbei erfolgt mittels der Rohrpresszange eine plastische Verformung der zu verbindenden Rohre oder eines sogenannten, die mechanische Verbindung und die fluiddichte Abdichtung gewährleistenden Fittings. Beispielhafte Ausführungsformen einer Rohrpresszange können den Druckschriften DE 197 09 639 A1, DE 198 34 859 C2, DE 199 24 086 C2, DE 199 24 087 C2, DE 199 63 097 C1, DE 103 46 241 B3, EP 2 995 424 A1 entnommen werden.

Die Erfindung betrifft auch eine Zangenbetätigungsbaugruppe, die zur Bildung einer Zange derart mit einem Zangenkopf koppelbar ist, dass mittels einer manuellen Betätigung der Zangenbetätigungsbaugruppe ein Hub von Gesenkhälften des Zangenkopfes herbeiführbar ist.

Des Weiteren betrifft die Erfindung ein Verfahren, mittels dessen eine Zangenbetätigungsgruppe montiert werden kann.

### STAND DER TECHNIK

DE 100 569 00 C1 offenbart eine Crimpzange, die eine Crimpzangenbetätigungsbaugruppe sowie einen Crimpzangenkopf aufweist. Die Crimpzangenbetätigungsbaugruppe verfügt über zwei Handhebel, die über einen Schwenkbolzen verschwenkbar miteinander verbunden sind. An den Handhebeln ist jeweils beabstandet von dem Schwenkbolzen eine Zuglasche angelenkt. Die Crimpzangenbetätigungsbaugruppe verfügt über ein Zwangsgesperre, mittels dessen bei einem Durchlaufen eines Crimphubs eine einmal erreichte Teilschließstellung der Handhebel ratschenartig gesichert wird und nur am Ende des Crimphubs eine Öffnungsbewegung der Handhebel ermöglicht wird. Der Crimpzangenkopf verfügt über einen Zangenkopfrahmen, an welchem eine feste Gesenkhälfte fixiert ist und eine bewegliche Gesenkhälfte in Richtung einer Crimpachse verschieblich geführt ist. Die bewegliche Gesenkhälfte ist über eine Federeinrichtung so an dem Zangenkopfrahmen abgestützt, dass die Federeinrichtung die Gesenkhälfte in eine Öffnungsrichtung beaufschlagt. Der Zangenkopfrahmen verfügt über sich parallel zueinander erstreckende Rahmenplatten, zwischen denen die feste Gesenkhälfte gehalten ist und die bewegliche Gesenkhälfte geführt ist. Für die Montage der Crimpzangenbetätigungsbaugruppe an dem Crimpzangenkopf weist die bewegliche Gesenkhälfte eine einseitig in Richtung des Schwenkbolzens der Crimpzangenbetätigungsbaugruppe offene, U-förmige Schwenkbolzen-Aufnahme auf. Des Weiteren verfügt der Zangenkopfrahmen über Zuglaschen-Kopplungseinrichtungen, die vertikal zur Zangenkopfebene orientierte Durchgangsbohrungen der Rahmenplatten aufweisen. Die Zuglaschen verfügen jeweils in dem Endbereich, der der Anlenkung an die Handhebel abgewandt ist, über eine vertikal zur Zangenkopfebene orientierte Durchgangsbohrung. Für die Montage wird die Crimpzangenbetätigungsbaugruppe so an den Crimpzangenkopf angenähert, dass der Schwenkbolzen, der die Handhebel verschwenkbar miteinander verbindet, in die Schwenkbolzen-Aufnahme eintritt. Gleichzeitig werden die Zuglaschen so zwischen die Rahmenplatten geschwenkt, dass die Bohrungen der Rahmenplatten fluchten mit den Bohrungen der Zuglaschen. In die fluchtenden Bohrungen werden dann Kopplungsbolzen oder -niete eingesetzt. In dem montierten Zustand ist der Crimpzangenkopf mit den Rahmenplatten und den darin angeordneten Zuglaschen zwischen Köpfen der Kopplungsbolzen und einer Rastkugel des Kopplungsbolzens gefangen. Abseits des Schwenkbolzens, über den die beiden Handhebel verschwenkbar miteinander verbunden sind, ist an einem Handhebel ein Querbolzen gehalten, welcher sich in ein Langloch des anderen Handhebels erstreckt, wobei dieses Langloch derart gekrümmt ist, das sich das Langloch konzentrisch zu der durch den Schwenkbolzen vorgegebenen Schwenkachse erstreckt. Ein maximaler Öffnungswinkel der Handhebel ist dadurch vorgegeben, dass der Querbolzen zum Anschlag an eine endseitige Begrenzung des Langloches kommt. Die Crimpzange weist ein Zwangsgesperre auf. Das Zwangsgesperre sichert eine Teilschließstellung der Handhebel gegenüber einer Öffnungsbewegung, auch wenn die von dem Benutzer auf die Handhebel applizierten Handkräfte temporär verringert oder beseitigt werden, womit auch die Anlage der Gesenkhälften an ein Werkstück gesichert ist und eine unerwünschte Relativbewegung des Werkstücks in den Gesenkhälften vermieden ist. Mittels des Zwangsgesperres wird gewährleistet, das eine Öffnungsbewegung der Handhebel und damit der Gesenkhälften erst mit dem Erreichen einer Schließstellung der Handhebel möglich ist. Das Zwangsgesperre weist eine an den Handhebeln verdrehbar gelagerte Sperrklinke auf. Die Sperrklinke ist über eine Feder beaufschlagt, die mit einem Federfußpunkt an einem zugeordneten Handhebel angelenkt ist. Die Feder ist dabei als Spiral-Zugfeder ausgebildet, die endseitig offene Drahtösen aufweist, die in Bohrungen des Handhebels und der Sperrklinke eingehängt werden können, die vertikal zur Schwenkebene der Handhebel orientiert sind.

Eine hinsichtlich der Montage entsprechende Crimpzange ist aus EP 2 463 969 A2 bekannt.

EP 2 834 989 A1 offenbart ein Handzangenwerkzeug, bei dem es sich um eine Crimpzange, eine Rohrpresszange oder eine Schneidzange handeln kann. Um die Zahl der Bauelemente des Handzangenwerkzeugs zu reduzieren und die Montage und Demontage zu vereinfachen, schlägt EP 2 834 989 A1 vor, dass ein Zangenschwenkteil, bei dem es sich um ein Zangenbackenteil, eine Sperrklinke oder einen Druckhebel handelt, einen plattenförmigen Grundkörper aufweist, der zwischen zwei Wangen eines Handhebels oder eines festen Zangenbackenteils aufgenommen und geführt ist. Einstückig mit dem Grundkörper des Zangenschwenkteil ist ein Schwenkbolzen ausgebildet, der auf beiden Seiten der Grundplatte angeordnete fluchtende Zapfen aufweist. Der Schwenkbolzen ist in einer von den Wangen gebildeten Aufnahme aufgenommen zwecks Bildung eines Schwenklagers. Um die Montage des Zangenschwenkteils mit dem die Wangen ausbildenden Handhebel oder dem festen Zangenteil zu ermöglichen, bildet der Handhebel oder das feste Zangenteil für den einen Zapfen ein Lagerauge in Form einer randgeschlossenen Bohrung sowie andererseits für den anderen Zapfen ein über einen Einführschlitz zugängliches Lagerauge aus. Für die Montage kann ein Zapfen in das randgeschlossene Lagerauge eingesetzt werden, während dann das Zangenschwenkteil über den Einführschlitz in das randoffene Lagerauge eingeschwenkt wird.

Weiterer Stand der Technik ist aus EP 0 303 889 A2 bekannt.

### AUFGABE DER ERFINDUNG

Der vorliegenden Erfindung liegt die Aufgabe zugrunde, ein Verfahren zur Montage einer Zangenbetätigungsbaugruppe vorzuschlagen, welches hinsichtlich
- der Zahl der Bauteile der Zangenbetätigungsbaugruppe und/oder
- der Montage und/oder Demontage und/oder
- der Ermöglichung einer zumindest teilautomatischen Montage
verbessert ist. Des Weiteren liegt der Erfindung die Aufgabe zugrunde, eine entsprechend verbesserte Zangenbetätigungsbaugruppe sowie eine entsprechend verbesserte Zange vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die der Erfindung zugrunde liegende Aufgabe wird gelöst durch ein Verfahren zur Montage einer Zangenbetätigungsbaugruppe. Diese Zangenbetätigungsbaugruppe ist zur Bildung einer Zange derart mit einem Zangenkopf koppelbar, dass mittels einer manuellen Betätigung der Zangenbetätigungsbaugruppe ein Hub von Gesenkhälften des Zangenkopfe herbeiführbar ist.

Die erfindungsgemäß zu montierende Zangenbetätigungsbaugruppe weist zwei Handhebel auf. Mindestens einer der Handhebel weist zwei Handhebelplatten auf, die (für fertig montierte Zangenbetätigungsbaugruppe) starr miteinander verbunden sind. Die beiden Handhebel sind über einen Schwenkbolzen verschwenkbar miteinander verbunden.

Die erfindungsgemäß zu montierende Zangenbetätigungsbaugruppe kann ein Zwangsgesperre aufweisen, welches eine Teilschließstellung der Handhebel gegenüber einer Öffnungsbewegung sichert und eine Öffnungsbewegung erst mit dem Erreichen einer Schließstellung der Handhebel ermöglicht. Das Zwangsgesperre kann dann eine Sperrklinke aufweisen, die verschwenkbar an einem Handhebel gelagert ist. Die Sperrklinke ist über eine Feder beaufschlagt. Ein Federfußpunkt der Feder ist dabei an dem Handhebel abgestützt, an dem die Sperrklinke gelagert ist. Insoweit kann die erfindungsgemäß zu montierende Zangenbetätigungsbaugruppe beispielsweise auch gemäß dem eingangs genannten Stand der Technik DE 100 569 00 C1 ausgebildet sein.

In der erfindungsgemäß zu montierenden Zangenbetätigungsbaugruppe weisen/weist die Sperrklinke eines etwaigen Zwangsgesperres, die Feder eines etwaigen Zwangsgesperres und/oder mindestens eine Zuglasche, über welche die Zangenbetätigungsbaugruppe mit dem Zangenkopf gekoppelt werden kann, Absätze und den Absätzen vorgeordnete Fortsätze auf.

Die Absätze und Fortsätze können in dem erfindungsgemäßen Verfahren vorteilhaft wie folgt genutzt werden: In dem erfindungsgemäßen Verfahren erfolgt die Montage mit einem Fügen der Sperrklinke, der Feder und/oder der Zuglasche in eine Fügerichtung in eine Handhebelplatte. Hierbei ist die Fügerichtung insbesondere vertikal zur Haupterstreckungsebene der Handhebelplatte orientiert. Mit diesem Fügen tritt ein Fortsatz der Sperrklinke, der Feder und/oder der Zuglasche ein in eine Aufnahme der Handhebelplatte. Die Aufnahme ist hierbei eine durch die Handhebelplatte durchgehende Aufnahme oder eine Sackloch-artige Aufnahme. Der Querschnitt der Aufnahme ist für die erfindungsgemäße Zangenbetätigungsbaugruppe randgeschlossen, während der Querschnitt der Aufnahme für das erfindungsgemäße Verfahren randgeschlossen oder randoffen sein kann. Vorzugsweise ist die Aufnahme eine Durchgangsbohrung der Handhebelplatte. Am Ende der genannten Fügebewegung und des Eintritts des Fortsatzes in die Aufnahme kommt ein dem Fortsatz benachbarter Absatz der Sperrklinke, der Feder oder der Zuglasche in die Fügerichtung zur Anlage an die Handhebelplatte, womit bereits eine axiale Festlegung oder ein Anschlag für die Position der Sperrklinke, Feder und/oder Zuglasche in die Fügerichtung bereitgestellt ist. Die Querschnitte einerseits des Fortsatzes und andererseits der Aufnahme können dabei so gewählt werden, dass eine Verdrehung des Fortsatzes in der Aufnahme möglich ist, womit dann eine relative Schwenkbewegung der Sperrklinke, der Feder und/oder der Zuglasche gegenüber der Handhebelplatte gewährleistet werden kann. Möglich ist auch, dass die Aufnahme eines Fortsatzes in einer Aufnahme einen Federfußpunkt für die Abstützung der Feder bildet.

Nach dem vorgenannten Fügeschritt erfolgt das Fügen der anderen Handhebelplatte in dieselbe Fügerichtung, womit ein Fügen der Handhebelplatte auf die Sperrklinke, Feder und/oder Zuglasche erfolgt. Während dieser Fügebewegung tritt der andere Fortsatz der Sperrklinke, der Feder und/oder der Zuglasche in eine Aufnahme der anderen Handhebelplatte ein. Für die Gestaltung der Aufnahme gilt das zuvor Gesagte entsprechend. Am Ende dieser Fügebewegung kommt ein Absatz der Sperrklinke, der Feder und/oder der Zuglasche zur Anlage an die andere Handhebelplatte.

In einem anschließenden Montageschritt erfolgt dann ein Fixieren der Relativlage der Handhebelplatten, was durch Verschraubungen der Handhebelplatten miteinander, ein Vernieten der Handhebelplatten oder ein beliebiges anderweitiges festes Verbinden der Handhebelplatten miteinander erfolgen kann. In dem fixierten Zustand der Relativlage der Handhebelplatten sind dann die Absätze der Sperrklinke, Feder und/oder Zuglasche zwischen den beiden Handhebelplatten gefangen. Die Sperrklinke, Feder und/oder Zuglasche sind/ist auf diese Weise gegenüber einer Demontage von den relativ zueinander fixierten Handhebelplatten gesichert.

Für den Fall, dass die Feder die Fortsätze und die Absätze aufweist stellt die erfindungsgemäße Montage eine signifikante Vereinfachung des Montagevorgangs für die Verbindung der Federfußpunkte der Feder dar, da eine hohe manuelle Fertigkeit erfordernde, filigrane Einfädelung einer Öse der Feder in die Sperrklinke und/oder die Handhebelplatte entbehrlich ist. Vielmehr kann ein einfaches axiales Fügen der Feder im Bereich des Fortsatzes in die zuvor genannte Fügerichtung erfolgen. Auch für die Ausgestaltung der Sperrklinke und/oder der Zuglasche mit den Fortsätzen und den Absätzen ergibt sich eine vereinfachte Montage, bei der (vereinfacht gesagt) lediglich ein Einstecken der Fortsätze in die zugeordneten Aufnahmen erfolgen muss. Dennoch ist eine sehr zuverlässige und robuste Verbindung gewährleistet, die gegebenenfalls auch den erforderlichen Schwenkfreiheitsgrad gewährleistet.

Erfindungsgemäß sind die Feder, die Sperrklinke und/oder die Zuglasche einstückig mit den Fortsätzen und den Abätzen ausgebildet, womit einerseits zusätzliche Montageschritte vermieden werden können und andererseits die Zahl der Bauelemente verringert werden kann.

Möglich ist, dass die Montage und/oder das Fügen manuell erfolgt, wobei dann diese manuelle Montage wie erläutert vereinfacht ist. Für einen weiteren Vorschlag der Erfindung erfolgt eine zumindest teilautomatisierte Montage. Unter Umständen ermöglicht erst das erläuterte Fügen der Sperrklinke, der Feder und der Zuglasche in die erläuterte Fügerichtung in eine Handhebelplatte und das anschließende Fügen der anderen Handhebelplatte in dieselbe Fügerichtung eine automatisierte Montage, bei der über ein von einem Aktuator bewegtes Handhabungsorgan die Sperrklinke, die Feder oder Zuglasche gegriffen wird und dann in Fügerichtung in die Handhebelplatte eingesetzt wird. Hieran anschließend kann dann dasselbe Handhabungsorgan oder ein weiteres, von demselben oder einem anderen Aktuator betätigtes Handhabungsorgan die andere Handhebelplatte fügen. Beispielsweise kann die erstgenannte Handhebelplatte auf einem Montagetisch aufliegen und das Einsetzen der Sperrklinke, der Feder und/oder der Zuglasche kann dann in Fügerichtung vertikal von oben erfolgen mit anschließender Montage der anderen Handhebelplatte ebenfalls von oben. Eine zumindest teilautomatisierte Montage war für aus dem Stand der Technik bekannten Zangenbetätigungsbaugruppen nicht (oder nur mit einem nicht vertretbaren Aufwand) möglich. So kann beispielsweise gemäß dem Stand der Technik ein automatisches Einhängen von Federösen einer Feder in Bohrungen der Sperrklinke und/oder der Handhebelplatte, die vertikal zur Schwenkebene der Handhebel orientiert sind, allenfalls mit einem großen Automatisierungsaufwand erfolgen.

Eine weitere Lösung der der Erfindung zugrunde liegenden Aufgabe stellt eine Zangenbetätigungsbaugruppe dar mit den konstruktiven Merkmalen, wie diese bereits zuvor beschrieben worden sind. Hierbei ist die Zangenbetätigungsbaugruppe mit dem zuvor erläuterten Verfahren montiert worden, und die Aufnahme der Handhebelplatte, in der der Fortsatz abgestützt ist, ist randgeschlossen.

Grundsätzlich kann die Sperrklinke (auch bei einstückiger Ausgestaltung mit den Absätzen und dem Fortsatz) auf beliebige Weise hergestellt sein. So kann die Sperrklinke beispielsweise als Gussteil, als Frästeil oder als MIM-Teil hergestellt sein. Für einen Vorschlag der Erfindung ist die Sperrklinke ein gebogenes Blechteil. In diesem Fall bildet das Blechteil insbesondere die Absätze und die Fortsätze, ein Eingriffsteil und ein Angriffsteil aus. Hierbei greift das Eingriffsteil ein in eine Verzahnung des Zwangsgesperres. Hingegen dient das Angriffsteil als Angriffsfläche für die Feder. Möglich ist, dass die Feder in das Angriffsteil eingreift, beispielsweise in eine randgeschlossene oder randoffene Ausnehmung des Angriffsteils. Alternativ möglich ist, dass die Feder im Bereich des Angriffsteils lediglich lose an der Sperrklinke anliegt, um die Sperrklinke zu beaufschlagen.

Auch für die Ausgestaltung der Feder gibt es vielfältige unterschiedliche Möglichkeiten. Für einen Vorschlag der Erfindung ist die Feder ein T-förmiges Federblech. In diesem Fall kann der Vertikalschenkel T eine Blattfeder bilden, während die beiden Horizontalschenkel des T die Fortsätze ausbilden. Die Übergänge von dem Vertikalschenkel zu den Horizontalschenkeln des T bilden dann die Absätze aus. Hierbei kann die Länge des Vertikalschenkels beispielsweise um einen Faktor von mindestens 5, mindestens 10 oder mindestens 15 größer sein als die Länge der Horizontalschenkel des T. Eine derart ausgebildete Feder stellt eine besonders einfache und kostengünstige Ausgestaltung der Feder dar, die gleichzeitig eine einfache Montage ermöglicht, die Bauteilvielfalt verringert und/oder robust ist gegenüber einer Veränderung der Federcharakteristik auch bei einem dauerhaften Betrieb.

Für eine andere Ausgestaltung ist die Feder eine Schenkelfeder, Spiralfeder oder Kreisfeder, die vorzugsweise aus einem Federdraht hergestellt ist. In diesem Fall weist die Feder zwei Schenkel auf. Ein Schenkel weist eine endseitige Abwinklung auf, die parallel zur Biegeachse der Schenkelfeder orientiert ist und den Fortsatz bildet, der (nach dem Einstecken in Fügerichtung) in einer Aufnahme einer Handhebelplatte aufgenommen ist. Hingegen beaufschlagt der andere Schenkel die Sperrklinke, was durch reines Anliegen des anderen Schenkels an der Sperrklinke der Fall sein kann oder über ein Eingriff des Schenkels in die Sperrklinke.

Möglich ist für die Ausgestaltung der Feder als Schenkelfeder, Spiralfeder oder Kreisfeder mit zwei Schenkeln, dass auch der andere Schenkel eine endseitige Abwinklung aufweist. Vorzugsweise sind die beiden Abwinklungen der beiden Schenkel parallel zueinander orientiert, aber diese weisen entgegengesetzte Richtungen auf. Die endseitige Abwinklung des anderen Schenkels bildet dann einen Fortsatz aus, der in eine Aufnahme der Sperrklinke eingreift.

In einer weiteren Ausführungsform der erfindungsgemäßen Zangenbetätigungsbaugruppe weist die Sperrklinke zwei Stellungen auf, nämlich eine Sicherungsstellung und eine Freigabestellung. In der Sicherungsstellung kann die Sperrklinke während einer Schließbewegung der Handhebel ratschenartig entlang einer Verzahnung des Zwangsgesperres gleiten, während die Sperrklinke zwecks Gewährleistung der Funktion des Zwangsgesperres eine Öffnungsbewegung der Handhebel blockiert. Hingegen gleitet die Sperrklinke in der Freigabestellung während einer Öffnungsbewegung der Handhebel ratschenartig entlang der Verzahnung des Zwangsgesperres. Für eine bekannt Ausgestaltung beispielsweise gemäß DE 100 569 00 C1 ist die Sperrklinke von einer Zugfeder beaufschlagt, deren Beaufschlagung maximal ist in der Sicherungsstellung. Mit dem Erreichen der Schließstellung der Handhebel zieht die Zugfeder die Sperrklinke in die Freigabestellung, womit die Beaufschlagung der Feder minimal ist. Erfindungsgemäß wird abweichend vorgeschlagen, dass die Sperrklinke derart mit der Feder gekoppelt ist, dass die Beaufschlagung der Feder in einer Stellung zwischen der Sicherungsstellung und der Freigabestellung ein Minimum hat. Dies bedeutet, dass die Beaufschlagung der Feder ausgehend von der Stellung, in der die Beaufschlagung minimal ist, in Richtung der Sicherungsstellung und der Freigabestellung (um dasselbe Ausmaß oder in unterschiedlichem Ausmaß) größer wird. Gegenüber dem Stand der Technik kann auf diese Weise ein anderes Kraftniveau der Feder einerseits in der Sicherungsstellung und andererseits in der Freigabestellung vorgegeben werden, was vorteilhaft für die Funktion der Zangenbetätigungsbaugruppe sein kann. Andererseits muss gemäß dem Stand der Technik die Feder und deren Federsteifigkeit sowie Festigkeit derart gewählt werden, dass die Federkraft für den gesamten Schwenkwinkel zwischen der Sicherungsstellung und der Freigabestellung von dem Minimum bis zum Maximum verändert werden kann. Hingegen muss erfindungsgemäß einerseits zwischen der Stellung mit dem Minimum und der Sicherungsstellung und andererseits der Stellung mit dem Minimum und der Freigabestellung lediglich für einen verringerten Winkelbereich die Veränderung der Federkraft zwischen dem Minimum und der bis zu der Sicherungsstellung bzw. der Freigabestellung ansteigenden Maximum gewährleistet werden. Vorzugsweise erfolgt die Kopplung der Feder mit der Sperrklinke derart, dass (ausgehend von der Stellung, in der die Federkraft minimal ist) die Feder sowohl in Richtung der Sicherungsstellung als auch in Richtung der Freigabestellung in dieselbe Richtung beaufschlagt wird.

Eine weitere Lösung der der Erfindung zugrunde liegenden Aufgabe stellt eine Zange dar, die einerseits über eine Zangenbetätigungsbaugruppe verfügt, wie diese zuvor erläutert worden ist. Des Weiteren verfügt die Zange über einen Zangenkopf, der derart mit der Zangenbetätigungsbaugruppe koppelbar ist, dass mittels einer manuellen Betätigung der Betätigungsbaugruppe ein Hub von Gesenkhälften des Zangenkopfes herbeiführbar ist. Hierbei kann die Kopplung zwischen der Zangenbetätigungsbaugruppe und dem Zangenkopf grundsätzlich gemäß den eingangs erläuterten Ausführungsformen, insbesondere gemäß DE 100 569 00 C1 erfolgen oder in anderer, in dem vorliegenden Anmeldungstext beschriebener Weise.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer Explosionsdarstellung eine Zangenbetätigungsbaugruppe einer Zange.
- **Fig. 2**: zeigt in einer räumlichen Darstellung die Zangenbetätigungsbaugruppe einer Zange gemäß Fig. 1 in montiertem Zustand.
- **Fig. 3**: zeigt in einer Explosionsdarstellung einen Zangenkopf einer Zange, der zusammen mit einer Zangenbetätigungsbaugruppe gemäß Fig. 1 und 2 verwendet werden kann.
- **Fig. 4**: zeigt in einer räumlichen Darstellung den Zangenkopf einer Zange gemäß Fig. 3 in montiertem Zustand.
- **Fig. 5 bis 8**: zeigen in räumlichen Darstellungen eine Montage und den Betrieb einer Zange mit einer Zangenbetätigungsbaugruppe gemäß Fig. 1 und 2 sowie einem Zangenkopf gemäß Fig. 3 und 4.
- **Fig. 9**: zeigt einen teilmontierten Zustand einer Zange gemäß Fig. 5 bis 8 in einer Draufsicht auf die Zangenkopfebene.
- **Fig. 10**: zeigt die Zange gemäß Fig. 5 bis 9 in einer geschnittenen Darstellung bei Schnittführung parallel zur Zangenkopfebene.
- **Fig. 11**: zeigt die Zange gemäß Fig. 5 bis 10 in einer Schließstellung in einer Draufsicht auf die Zangenkopfebene.
- **Fig. 12**: zeigt die Zange gemäß den Fig. 5 bis 11 in der Schließstellung in geschnittener Darstellung bei Schnittführung parallel zur Zangenkopfebene.
- **Fig. 13**: zeigt in einer räumlichen Darstellung eine Zuglasche, wie diese Einsatz finden kann in einer Zangenbetätigungsbaugruppe gemäß Fig. 1 und 2 und einer Zange gemäß Fig. 5 bis 12.
- **Fig. 14**: zeigt in einer Explosionsdarstellung eine weitere Ausführungsform einer Zangenbetätigungsbaugruppe.
- **Fig. 15**: zeigt in einer räumlichen Darstellung die montierte Zangenbetätigungsbaugruppe gemäß Fig. 14.
- **Fig. 16**: zeigt in einer Explosionsdarstellung einen Zangenkopf, der gemeinsam mit einer Zangenbetätigungsbaugruppe gemäß Fig. 14 und 15 einsetzbar ist.
- **Fig. 17**: zeigt den Zangenkopf gemäß Fig. 16 in montiertem Zustand in einer räumlichen Darstellung.
- **Fig. 18 bis 21**: zeigen eine Zange, die eine Zangenbetätigungsbaugruppe gemäß Fig. 14 und 15 sowie einen Zangenkopf gemäß Fig. 16 und 17 aufweist, in unterschiedlichen Montage- und Betriebsstellungen in einer Draufsicht auf die Zangenkopfebene, teilweise in geschnittenem Zustand bei Schnittführung parallel zur Zangenkopfebene.
- **Fig. 22 und 23**: zeigen in räumlichen Darstellungen unterschiedliche Ausgestaltungsmöglichkeiten von Zuglaschen einer Zangenbetätigungsbaugruppe gemäß Fig. 14 und 15 und einer Zange gemäß Fig. 18 bis 21.
- **Fig. 24**: zeigt in einer räumlichen Explosionsdarstellung eine Zangenbetätigungsbaugruppe.
- **Fig. 25**: zeigt in einer räumlichen Darstellung ein Anschlagteil einer Zangenbetätigungsbaugruppe gemäß Fig. 24.
- **Fig. 26**: zeigt in einer räumlichen Darstellung einen Schwenkbolzen einer Zangenbetätigungsbaugruppe gemäß Fig. 24.
- **Fig. 27 bis 37**: zeigen unterschiedliche Montagezustände für eine Montage einer Zangenbetätigungsbaugruppe gemäß Fig. 24.
- **Fig. 38**: zeigt in einer räumlichen Darstellung eine Sperrklinke eines Zwangsgesperres, welches aus einem Metallblech besteht und einstückig Fortsätze und Absätze ausbildet.
- **Fig. 39**: zeigt in einer räumlichen Darstellung eine als T-förmige Blattfeder ausgebildete Feder eines Zwangsgesperres.
- **Fig. 40 bis 42**: zeigen in einer Draufsicht eine teilmontierte oder teilgeschnittene Zangenbetätigungsbaugruppe mit einem Zwangsgesperre mit einer Sperrklinke gemäß Fig. 38 und einer Feder gemäße Fig. 39, wobei Fig. 40 die Feder und die Sperrklinke in einer Zwischenstellung zeigen, in der die Beaufschlagung der Feder minimal ist, während Fig. 41 die Sperrklinke und die Feder in einer Sicherungsstellung zeigt und Fig. 42 die Sperrklinke und die Blattfeder in einer Freigabestellung zeigt.
- **Fig. 43**: zeigt in einer räumlichen Darstellung eine Sperrklinke, die integral die Fortsätze und Absätze ausbildet.
- **Fig. 44**: zeigt eine als Schenkelfeder mit zwei Schenkeln ausgebildete Feder.
- **Fig. 45 bis 47**: zeigen in einer Draufsicht eine teilmontierte oder teilgeschnittene Zangenbetätigungsbaugruppe mit einem Zwangsgesperre mit einer Sperrklinke gemäß Fig. 43 und einer Feder gemäß Fig. 44, wobei Fig. 45 die Sperrklinke und die Feder in einer Zwischenstellung zeigt, während Fig. 46 die Sperrklinke und die Feder in einer Sicherungsstellung zeigt und Fig. 47 die Sperrklinke und die Feder in einer Freigabestellung zeigt.
- **Fig. 48**: zeigt in einer Draufsicht eine teilmontierte oder teilgeschnittene Ausgestaltung einer Zangenbetätigungsbaugruppe mit alternativer Ausgestaltung und/Anordnung einer als Schenkelfeder mit zwei Schenkeln ausgebildeten Feder.
- **Fig. 49**: zeigt in einer räumlichen Darstellung eine Sperrklinke.
- **Fig. 50**: zeigt in einer räumlichen Ansicht eine als Kreisfeder aus einem Federdraht mit zwei endseitigen Abwinklungen ausgebildete Feder.
- **Fig. 51**: zeigt in einer Draufsicht eine teilmontierte oder teilgeschnittene Zangenbetätigungsbaugruppe mit einem Zwangsgesperre mit einer Sperrklinke gemäß Fig. 49 und einer Feder gemäß Fig. 50.

### FIGURENBESCHREIBUNG

In der folgenden Beschreibung sind teilweise Komponenten oder Merkmale, die sich hinsichtlich der Gestaltung, Geometrie und/oder Funktion entsprechen oder ähneln, mit denselben Bezugszeichen gekennzeichnet, wobei diese dann über einen ergänzenden Buchstaben a, b, ... voneinander unterschieden sein können. In diesem Fall kann auf die Komponenten oder Merkmale mit oder ohne den ergänzenden Buchstaben Bezug genommen werden, wobei ohne Verwendung des ergänzenden Buchstabens dann eine Komponente oder ein Merkmal, mehrere Komponenten oder Merkmale oder sämtliche Komponenten oder Merkmale angesprochen sein können.

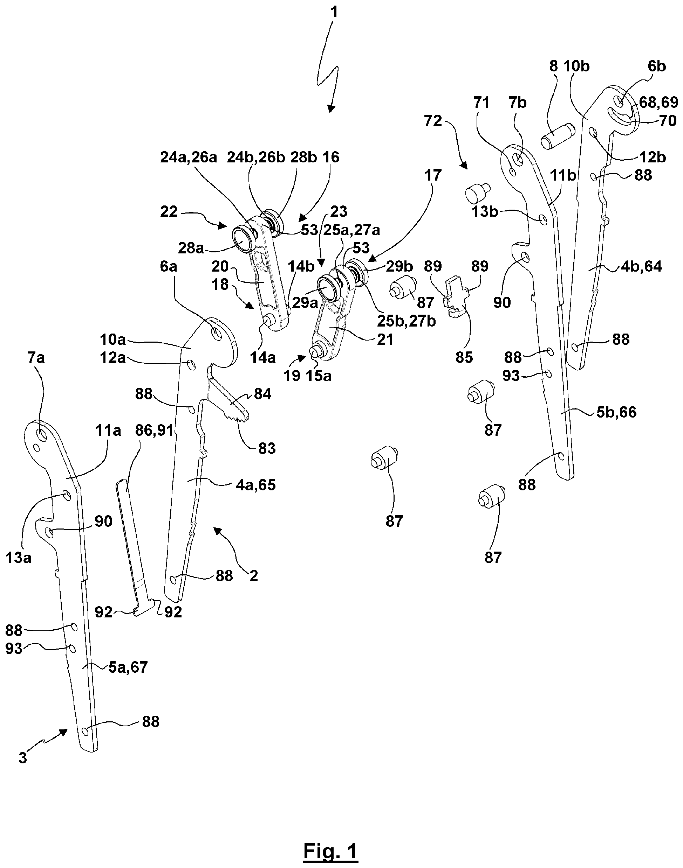

**Fig. 1** zeigt eine Zangenbetätigungsbaugruppe 1. Die Zangenbetätigungsbaugruppe 1 verfügt über Handhebel 2, 3. Der Handhebel 2 ist mit zwei Handhebelplatten 4a, 4b gebildet. Entsprechend ist der Handhebel 3 mit zwei Handhebelplatten 5a, 5b gebildet.

In dem Griffteil der Handhebel 2, 3 abgewandten Endbereich verfügen die Handhebel 2, 3 jeweils über ein Lagerauge 6, 7, die hier als Lageraugen 6a, 6b der Handhebelplatten 4a, 4b sowie als Lageraugen 7a, 7b der Handhebelplatten 5a, 5b ausgebildet sind.

Die Lageraugen 6, 7 sind Bohrungen, durch welche sich ein Schwenkbolzen 8 erstreckt, womit ein Schwenklager 9 gebildet ist. Über das Schwenklager 9 sind die Handhebel 2, 3 verschwenkbar miteinander verbunden, so dass diese eine Öffnungs- und Schließbewegung für die Herbeiführung eines (Crimp- oder Press-) Hubs und eines Öffnungshubs ausführen können.

Die Handhebel 2, 3 sind vorzugsweise geringfügig zueinander gekröpft ausgebildet mit Kröpfungen 10, 11. Im Bereich der Kröpfungen 10, 11 verfügen die Handhebel 2, 3 über hier als Bohrungen ausgebildete Aufnahmen 12, 13. In diesen Aufnahmen 12, 13 sind Schwenkzapfen bildende Fortsätze 14, 15 von Zuglaschen 16, 17 aufgenommen, womit Schwenklager 18, 19 gebildet sind, über die die Zuglaschen 16, 17 an den Handhebeln 2, 3 angelenkt sind. Für das dargestellte Ausführungsbeispiel verfügen die Zuglaschen 16, 17 jeweils auf beiden Seiten eines Grundkörpers 20, 21 über Fortsätze 14a, 14b bzw. Fortsätze 15a, 15b, die jeweils Aufnahme finden in Aufnahmen 12a, 12b bzw. Aufnahmen 13a, 13b der Handhebelplatten 4a, 4b bzw. 5a, 5b.

Die Zuglaschen 16, 17 sind geradlinig und streben- oder stangenartig ausgebildet. In dem den Fortsätzen 14, 15 abgewandten Endbereichen weisen die Zuglaschen 16, 17 jeweils ein Kopplungselement 22, 23 auf. Die Kopplungselemente 22, 23 verfügen auf beiden Seiten ihrer Grundkörper 20, 21 über Kopplungselementteile 24a, 24b bzw. 25a, 25b, die hier als Kopplungszapfen 26a, 26b bzw. 27a, 27b ausgebildet sind und in den von dem Grundkörper 20, 21 abgewandten Endbereichen Erweiterungen 28a, 28b, 29a, 29b aufweisen.

Für das in Fig. 1 dargestellte Ausführungsbeispiel sind die Zuglaschen 16, 17 einstückig ausgebildet, so dass die Grundkörper 20, 21, die Fortsätze 14, 15 und die Kopplungselemente 22, 23 integraler Bestandteil eines einzigen Bauelements sind.

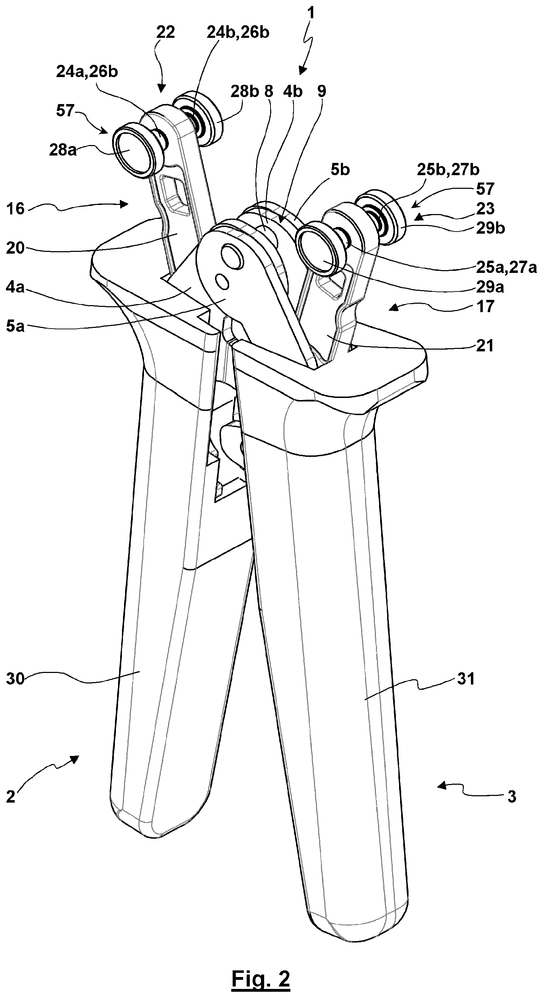

**Fig. 2** zeigt die Zangenbetätigungsbaugruppe 1 in dem montierten Zustand, wobei hier zusätzlich auf die Handhebel 2, 3 elastomere Griffe 30, 31 aufgeschoben sind. Zu erkennen ist hier, dass die Zuglaschen 16, 17 mit den Kopplungselementen 22, 33 frei nach oben aus der Zangenbetätigungsbaugruppe 1 herausstehen, wobei die Zuglaschen 16, 17 infolge der Anlenkung über die Schwenklager 18, 19 an den Handhebeln 2,3 frei verschwenkbar sind. Des Weiteren ist der Schwenkbolzen 8 zwischen den Handhebelplatten 4, 5 von oben frei zugänglich.

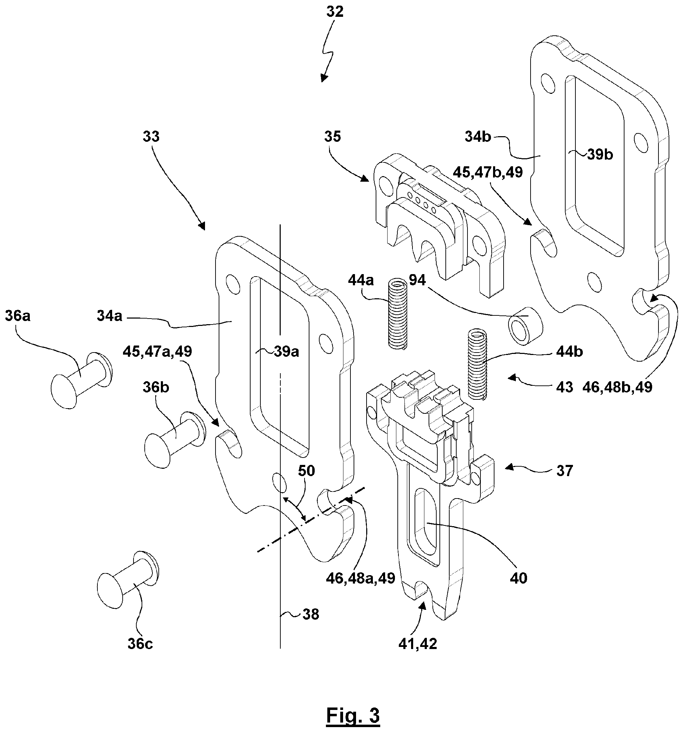

**Fig. 3** zeigt in einer räumlichen Explosionsdarstellung einen Zangenkopf 32. Der Zangenkopf 32 verfügt über einen Zangenkopfrahmen 33, der hier mit Rahmenplatten 34a, 34b gebildet ist. Zwischen den Rahmenplatten 34a, 34b ist eine feste Gesenkhälfte 35 angeordnet. Verbindungselemente, insbesondere Niete 36a, 36b, verbinden die Rahmenplatten 34a, 34b und die dazwischen angeordnete feste Gesenkhälfte 35 zu einer festen Baueinheit. Eine weitere Verbindung der beiden Rahmenplatten 34a, 34b erfolgt über einen weiteren Niet 36c.

Der Zangenkopf 32 verfügt des Weiteren über eine bewegliche Gesenkhälfte 37. Die bewegliche Gesenkhälfte ist in Richtung einer Crimp- oder Pressachse 38 verschieblich an dem Zangenkopfrahmen 33 geführt, was beispielsweise dadurch erfolgen kann, dass die Rahmenplatten 34a, 34b Ausnehmungen 39a, 39b aufweisen, die seitliche Führungsflächen bilden, an denen Führungsflächen der beweglichen Gesenkhälfte 37 geführt sind. Der Niet 36c kann sich mit der Hülse 94 durch eine Ausnehmung 40 der beweglichen Gesenkhälfte 37 hindurch erstrecken und eine ergänzende Führung und/oder eine Begrenzung der Bewegung der beweglichen Gesenkhälfte 37 gewährleisten.

In dem der festen Gesenkhälfte 35 abgewandten Endbereich verfügt die bewegliche Gesenkhälfte 37 über eine Schwenkbolzen-Aufnahme 41. Die Schwenkbolzen-Aufnahme 41 ist für das dargestellte Ausführungsbeispiel als U-förmige Ausnehmung 42 ausgebildet, die einen randoffenen Querschnitt ausbildet. Die Schwenkbolzen-Aufnahme 41, hier die Ausnehmung 42, ist nach unten, also in dem an der Zangenbetätigungsbaugruppe 1 montierten Zustand in Richtung der Zangenbetätigungsbaugruppe 1, offen.

Der Zangenkopf 32 verfügt über eine Federeinrichtung 43, die hier mit zwei Federn 44a, 44b gebildet ist. Die Federn 44 sind als Druckfedern ausgebildet. Die Federn 44 stützen sich mit einem Federfußpunkt an dem Zangenkopfrahmen 33 und/oder der festen Gesenkhälfte 35 ab, während der andere Federfußpunkt der Federn 44 an der beweglichen Gesenkhälfte 37 abgestützt ist. In der Öffnungsstellung, in der die Gesenkhälfte 37 den maximalen Abstand von der Gesenkhälfte 35 hat, ist die Beaufschlagung der Federeinrichtung 43 minimal, während die Beaufschlagung der Federeinrichtung 43 mit zunehmender Annäherung der Gesenkhälfte 34 an die Gesenkhälfte 35 über den Crimp- oder Presshub größer wird. Für das dargestellte Ausführungsbeispiel sind die Federn 44 symmetrisch auf beiden Seiten neben Gesenkflächen der Gesenkhälften 35, 37, zwischen denen das Werkstück vercrimpt oder verpresst wird, angeordnet.

Der Zangenkopfrahmen 33 verfügt über Kopplungsausnehmungen 45, 46. Hierbei bilden die Rahmenplatten 34a, 34b Kopplungsausnehmungsteile 47a, 47b der Kopplungsausnehmung 45 sowie Kopplungsausnehmungsteile 48a, 48b der Kopplungsausnehmung 46.

Für das dargestellte Ausführungsbeispiel sind die Kopplungsausnehmungen 45, 46 und die Kopplungsausnehmungsteile 47, 48 als in dem außenliegenden Endbereich einseitig offene Langlöcher 49 ausgebildet. Die Langlöcher 49 sind dabei unter einem spitzen Winkel 50 gegenüber der Crimp- oder Pressachse 38 geneigt, wobei der Winkel 50 vorzugsweise im Bereich von 20-80 ° oder 30 bis 60 ° oder 35 bis 55 ° liegt. Hierbei ist der spitze Winkel 50 so orientiert, dass der Scheitelpunkt in Richtung der Zangenbetätigungsbaugruppe 1 weist, so dass eine Eintrittsbewegung von außen in das Langloch 49 eine Komponente aufweist, die in Richtung der Schwenkbolzenaufnahme 41 und der Zangenbetätigungsbaugruppe 1 orientiert ist. Das Langloch 49 kann nicht parallele seitliche Begrenzungen aufweisen, die einen beliebigen kurvenförmigen Verlauf bei Projektion auf die Zangenkopfebene aufweisen.

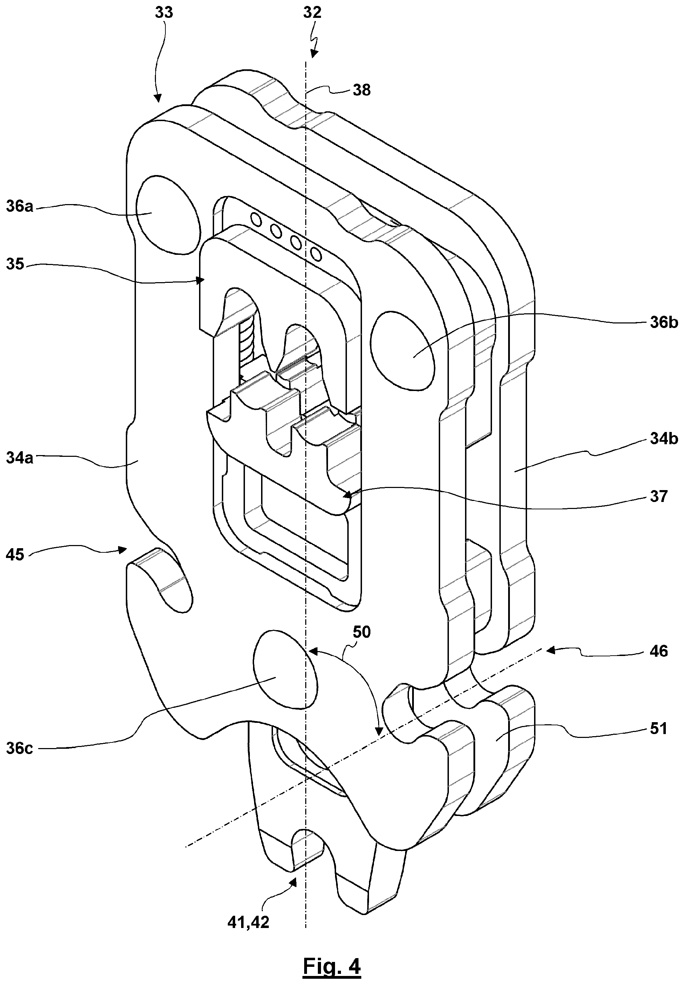

Infolge des Abstandes der Rahmenplatten 34 ergibt sich zwischen den Rahmenplatten 34 ein Zwischenraum 51 (vgl. **Fig. 4**), wobei dieser Zwischenraum 51 auch zwischen den Paaren der Kopplungsausnehmungsteile 47a, 47 b sowie Kopplungsausnehmungsteile 48a, 48b vorhanden ist. Im Bereich der Niete 36a, 36b wird der Zwischenraum 51 zwischen den Rahmenplatten 34 vorgegeben durch die Gesenkhälfte 35. Hingegen ist der Niet 36c von einer Hülse 94 umgeben, die im Bereich des Niets 36c den Abstand der Rahmenplatten 34 vorgibt.

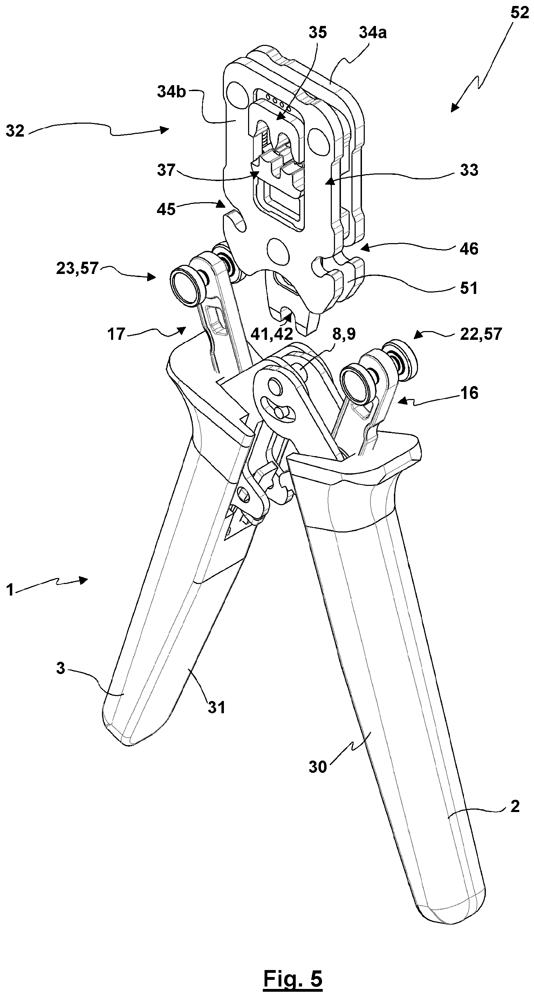

**Fig. 5** zeigt die Zangenbetätigungsbaugruppe 1 und den Zangenkopf 32 vor der Montage.

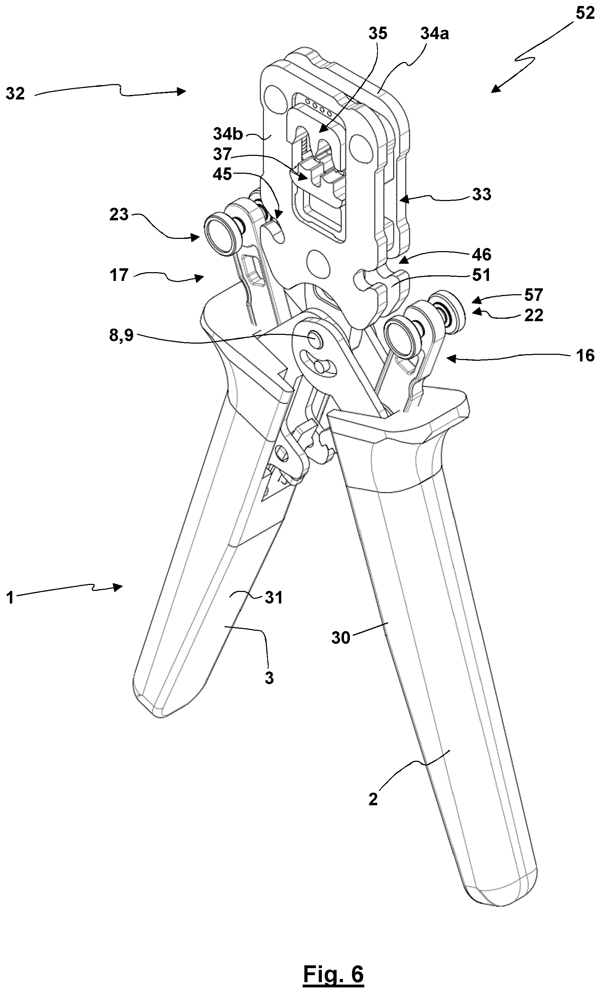

Gemäß **Fig. 6** wird für die Montage das Zangenbetätigungsteil 1 so von unten an den Zangenkopf 32 angenähert, dass der Schwenkbolzen 8 von unten in die Schwenkbolzen-Aufnahme 41 eintritt. Durch die Anlage des Schwenkbolzens 8 an den Boden der Schwenkbolzen-Aufnahme 41 kann zwischen der Zangenbetätigungsbaugruppe 1 und dem Zangenkopf 32 eine Betätigungskraft übertragen werden, die bestrebt ist, die bewegliche Gesenkhälfte 37 nach oben zu drücken. In der teilmontierten Stellung gemäß Fig. 6 befinden sich aber die Zuglaschen 16,17 noch in einer Schwenkstellung, in welcher sich diese ohne Kopplung seitlich von dem Zangenkopfrahmen 33 befinden.

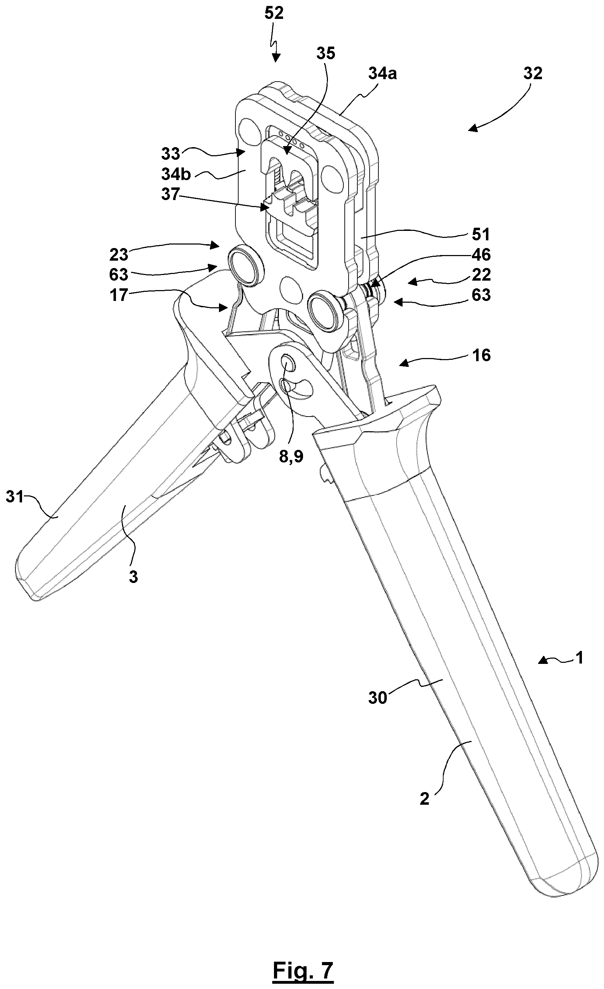

Für die weitere Montage werden gemäß **Fig. 7** die Zuglaschen 16, 17 nach innen in Richtung des Zangenkopfrahmens 33 aufeinander zu verschwenkt, bis die Kopplungselemente 22, 23 der Zuglaschen 16, 17 eintreten in die Kopplungsausnehmungen 45, 46 des Zangenkopfrahmens 33. Im vorliegenden Fall treten dabei die Kopplungszapfen 26a, 26b ein in die Kopplungsausnehmungsteile 47a, 47b der Rahmenplatten 34a, 34b und die Kopplungszapfen 27a, 27b der Zuglasche 17 treten ein in die Kopplungsausnehmungsteile 48a, 48b des Zangenkopfrahmens 33. Gleichzeitig treten die Grundkörper 20, 21 der Zuglaschen 16, 17 in den zwischen den Rahmenplatten 34a, 34b gebildeten Zwischenraum 51 ein.

Die Länge der Zuglaschen 16, 17 ist derart bemessen, dass der erläuterte Eintritt der Kopplungselement 22, 23 in die Kopplungsausnehmungen 45, 46 nur erfolgen kann, wenn eine Bewegung der beweglichen Gesenkhälfte 37 in Schließrichtung erfolgt. Diese Bewegung ist am größten, wenn die Kopplungselemente 22, 23 gerade in die Öffnungen der Kopplungsausnehmungen 45, 46 eintreten, während eine Rückbewegung der beweglichen Gesenkhälfte 37 in Öffnungsrichtung erfolgen kann, wenn sich die Kopplungselemente 22, 23 in das Innere der Kopplungsausnehmungen 45, 46 bis zu dem Boden derselben bewegen. Die für den Eintritt der Kopplungselemente 22, 23 in die Kopplungsausnehmungen 45, 46 erforderliche Teilschließbewegung ist dabei kleiner als der Crimp- oder Presshub und beträgt beispielsweise weniger als 20 %, weniger als 15 % oder weniger als 10 % des Crimp- oder Presshubs. Am Ende der Eintrittsbewegung, wenn die Kopplungselemente 22, 23 an dem Boden der Kopplungsausnehmungen 45, 46 anliegen, kann die bewegliche Gesenkhälfte 37 wieder die Ausgangsstellung, also die maximal geöffnete Stellung erreichen. Vorzugsweise verbleibt dann aber ein Teilschließweg, der beispielsweise weniger als 10 % oder weniger als 5 % des Crimp- oder Presshubs sein kann. Die erläuterte Teilschließbewegung und die beschriebenen Teilschließstellungen gehen mit einer Beaufschlagung der Federeinrichtung 43 einher. Die Federkraft der Federeinrichtung 43 bewirkt, dass die Kopplungselemente 22, 23 in die Kopplungsausnehmungen 45, 46 hereingezogen werden und mit einer Federkraftkomponente an den Boden der Kopplungsausnehmung 45, 46 gedrückt werden. Eine Demontage mit dem Herausführen der Kopplungselemente 22, 23 aus den Kopplungsausnehmungen 45, 46 erfordert somit eine Überwindung dieser Federkraftkomponente, die durch die Federeinrichtung 43 erzeugt wird.

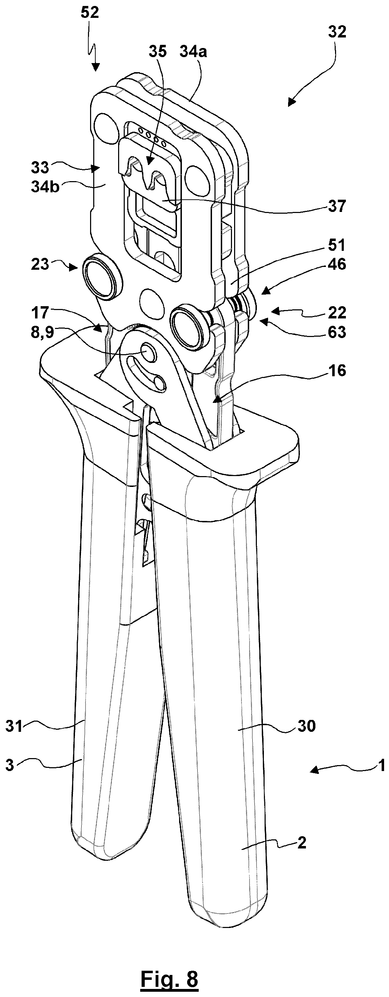

Wird eine durch die Montage der Zangenbetätigungsbaugruppe 1 und des Zangenkopfes 32 gebildete Zange 52 gemäß Fig. 7 zum Vercrimpen oder Verpressen eines Werkstücks verwendet, schließt der Bediener die Handhebel 2, 3, womit das Durchlaufen des Crimp- oder Presshubs herbeigeführt wird. **Fig. 8** zeigt die Zange 52 am Ende des Crimp- oder Presshubes, an dem die Handhebel 2, 3 und die Gesenkhälften 35, 37 geschlossen sind.

In den Fig. 7 und 8 ist zu erkennen, dass in eine Richtung vertikal zur Zangenkopfebene in dem montierten Zustand die Rahmenplatten 34a, 34b jeweils zwischen den Grundkörpern 20, 21 und einer Erweiterung 28, 29 gefangen sind.

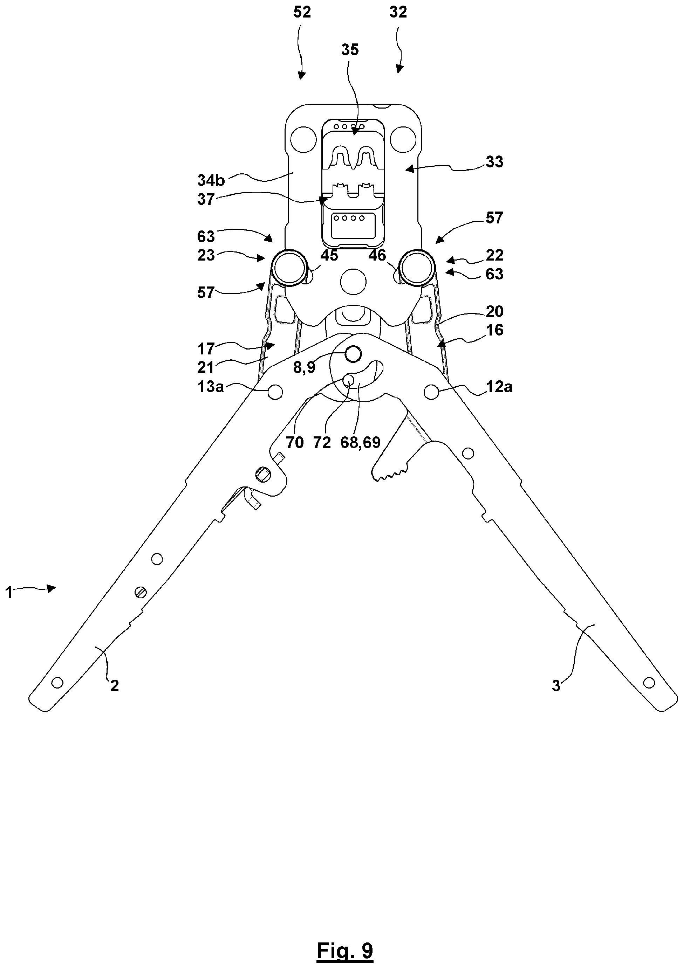

**Fig. 9** zeigt den teilmontierten Zustand der Zange 52 zum Zeitpunkt der Eintritte der Kopplungselemente 22, 23 in die Kopplungsausnehmungen 45, 46, wobei hier einige Teile der Zange 52 für die bessere Darstellung weggelassen sind.

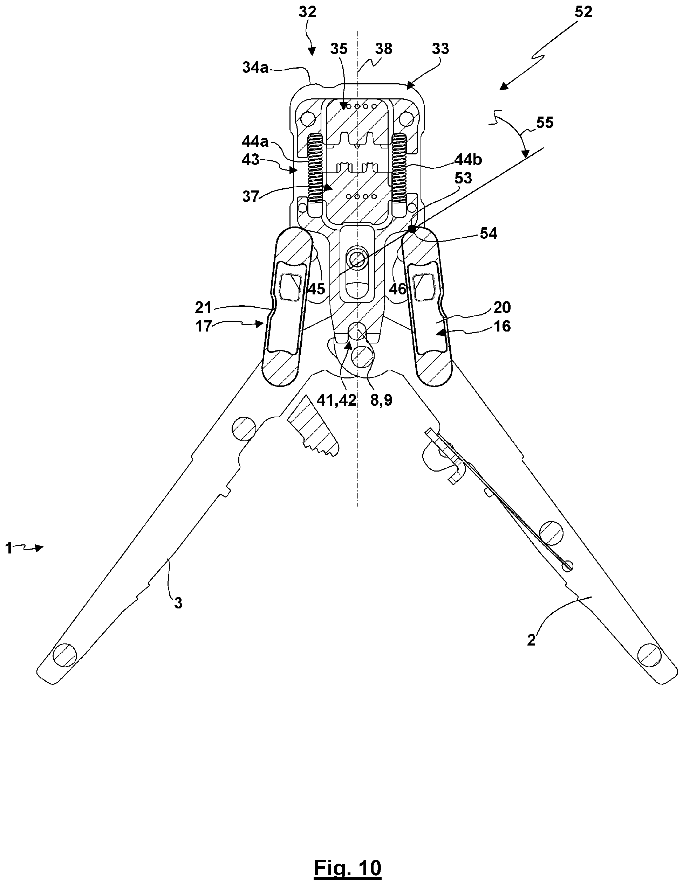

In einer entsprechenden Teilmontagestellung zeigt **Fig. 10** die Zange 52 in einer in der Ebene der Gesenke 35, 37 und in der Zangenkopfebene geschnittenen Darstellung, in der die Wechselwirkung des Schwenkbolzens 8 mit der Schwenkbolzen-Aufnahme 41 und die Anpressung infolge der Federn 44a, 44b zu erkennen ist.

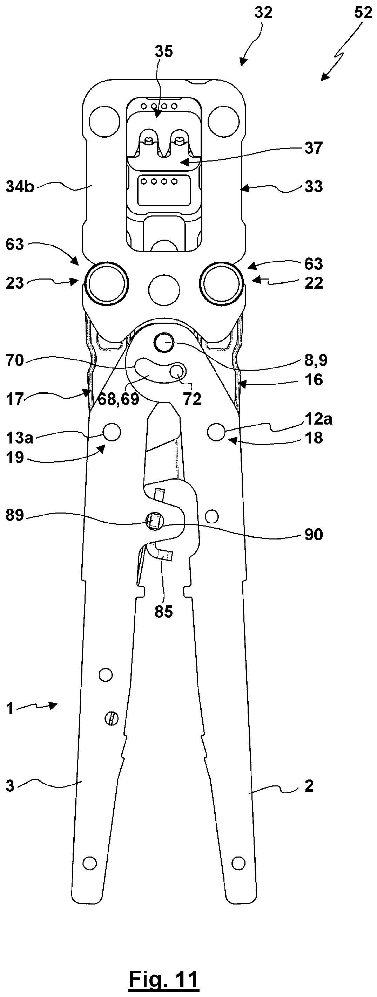

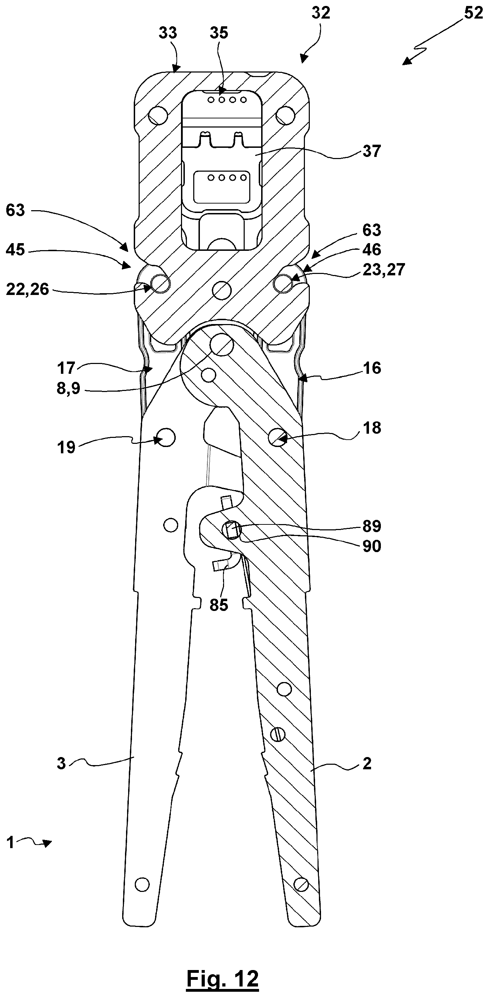

Schließlich zeigen **Fig. 11** **und** **12** den Fig. 9 und 10 entsprechende Darstellungen, wobei hier aber die Zange 52 in der Schließstellung am Ende des Crimp- oder Presshubes dargestellt ist.

Als eine optionale Besonderheit kann bei dem Eintritt der Kopplungselemente 22, 23 in die Kopplungsausnehmungen 45, 46 oder auch bereits zuvor bei der Annäherung der Zuglaschen 16, 17 an den Zangenkopfrahmen 33 eine Kontaktfläche 53 der Zuglaschen 16, 17, 4 des Grundkörpers 20, 21, zu Anlage an eine Kontaktfläche 54 der beweglichen Gesenkhälfte 37 kommen (vgl. Fig. 10). Eine auf die Zuglaschen 16, 17 aufgebrachte Betätigungskraft, die die Zuglaschen 16, 17 nach innen schwenkt, wird durch die Kontaktflächen 53, 54 umgewandelt in eine Betätigungskraftkomponente, die eine Montagehilfskraft bereitstellt, welche bestrebt ist, die bewegliche Gesenkhälfte 37 in Schließrichtung zu bewegen und die Federn 44a, 44b zu komprimieren. Zu diesem Zweck sind die Kontaktflächen 53, 54 unter einem spitzen Winkel 55 gegenüber der Crimp- oder Pressachse 38 geneigt. Während der Einführbewegung gleiten die Kontaktflächen 53, 54 aneinander entlang. Die Kontaktflächen 53, 54 können auch beliebig gekrümmt sein, so dass sich ein während der Einführbewegung variierender Winkel 55 ergibt.

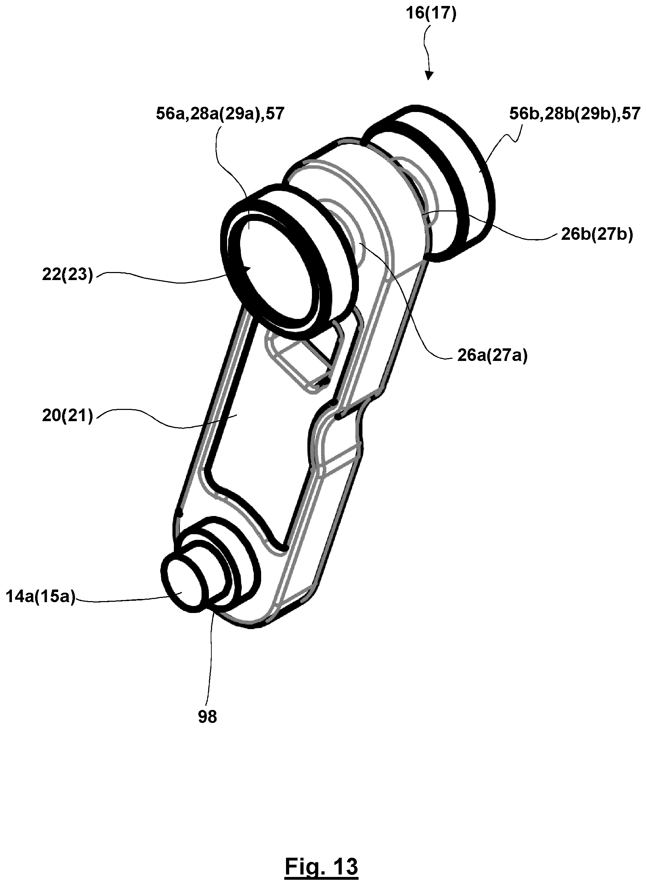

**Fig. 13** ist eine räumliche Einzelteilzeichnung einer Zuglasche 16, 17, die als ein integrales, einstückiges Bauelement den Grundkörper 20, 21, die Fortsätze 14a, 14b, 15a, 15b und die Kopplungselemente 22, 23 ausbildet. Zu erkennen ist hier, dass die Erweiterungen 28, 29 als Tellerkörper 56 ausgebildet sind. Möglich ist, dass die Erweiterungen 28, 29 oder Tellerkörper 56 Betätigungselemente 57 bilden, welche die Montage und Demontage vereinfachen, indem auf diese für die Montage und Demontage und Bewegung der Zuglaschen 16, 17 erforderlichen Betätigungskräfte von dem Benutzer aufgebracht werden können.

Die Kopplungsausnehmungen 45, 46 können eine beliebige Formgebung aufweisen. Sie müssen nicht als Langloch 49 ausgebildet sein. Vielmehr ist entscheidend, dass die Kopplungsausnehmungen 45, 46 nach oben orientierte Haken oder Einhängösen ausbilden, in welche die Kopplungselemente 22, 23 eingehängt werden können.

Das Ausführungsbeispiel gemäß den Fig. 1 bis 13 stellt eine mögliche Ausführungsform der obigen "ersten Variante" dar.

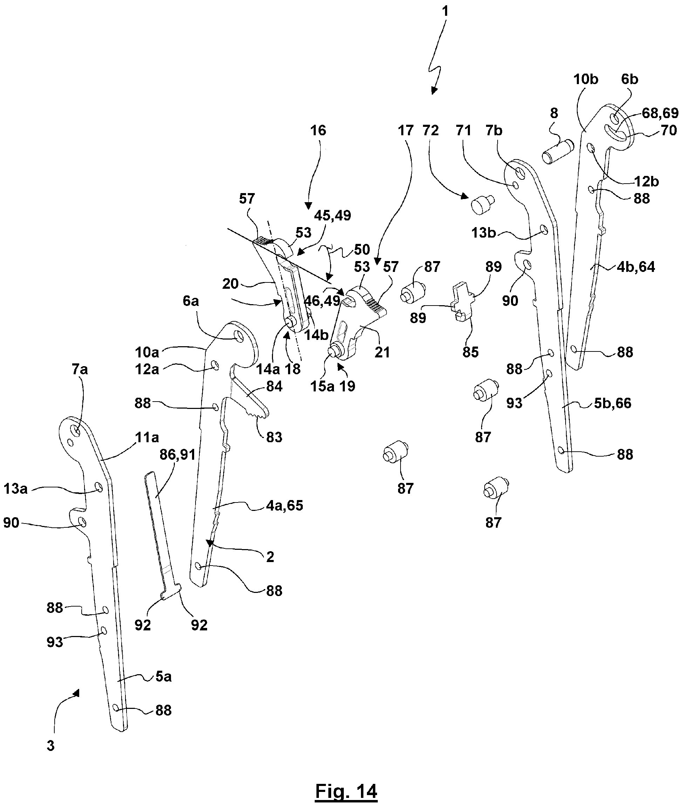

In den **Fig. 14 bis 21** ist ein weiteres Ausführungsbeispiel der Zangenbetätigungsbaugruppe 1, des Zangenkopfes 32 und der mit der Zangenbetätigungsbaugruppe 1 und dem Zangenkopf 32 gebildeten Zange 52 dargestellt, das eine mögliche Ausführungsform der obigen "zweiten Variante" darstellt. Hierbei werden für konstruktiv oder funktional entsprechende oder ähnelnde Komponenten und Merkmale dieselben Bezugszeichen verwendet wie in Fig. 1 bis 13 und es wird auf die diesbezügliche Beschreibung verwiesen.

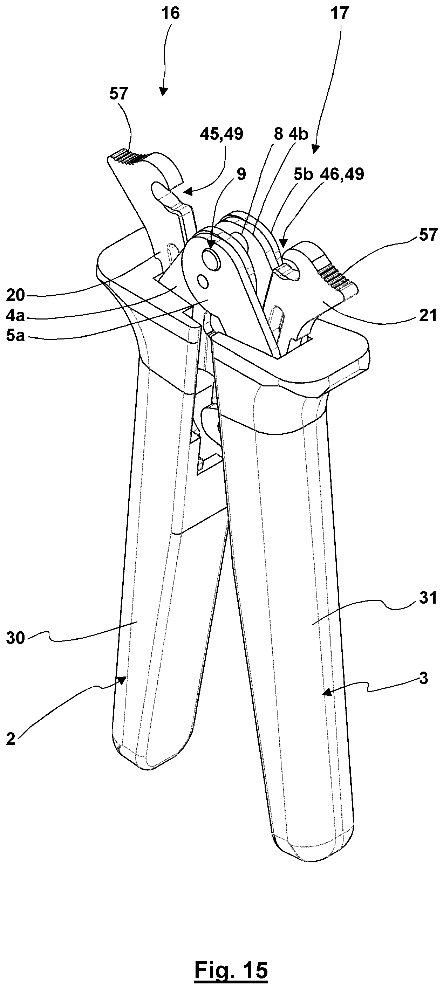

Die in Fig. 14 und 15 dargestellte Zangenbetätigungsbaugruppe verfügt über Zuglaschen 16, 17, die nicht über Kopplungselemente 22, 23 in Form von Kopplungszapfen 26, 27 verfügen. Vielmehr sind für dieses Ausführungsbeispiel die Zuglaschen 16, 17 mit den Kopplungsausnehmungen 45, 46 ausgestattet, die hier als einseitig offenes Langloch 49 ausgebildet sind. In diesem Fall sind die Kopplungsausnehmungen 45, 46 unter einem spitzen Winkel 50, der vorzugsweise im Bereich von 30° bis 85° oder 40° bis 80° oder 50° bis 80° liegt, gegenüber einer radialen Richtung zu der Schwenkachse der Schwenklager 18, 19 durch den Boden der Kopplungsausnehmung 45, 46 geneigt. Wie zu erkennen ist, verfügt in diesem Fall der Grundkörper 20, 21 der Zuglaschen 16, 17 über seitliche Fortsätze, die die Betätigungselemente 57 bilden. Ansonsten ist die Zangenbetätigungsbaugruppe 1 entsprechend der in Fig. 1 und 2 dargestellten und hierzu beschriebenen Zangenbetätigungsbaugruppe ausgebildet.

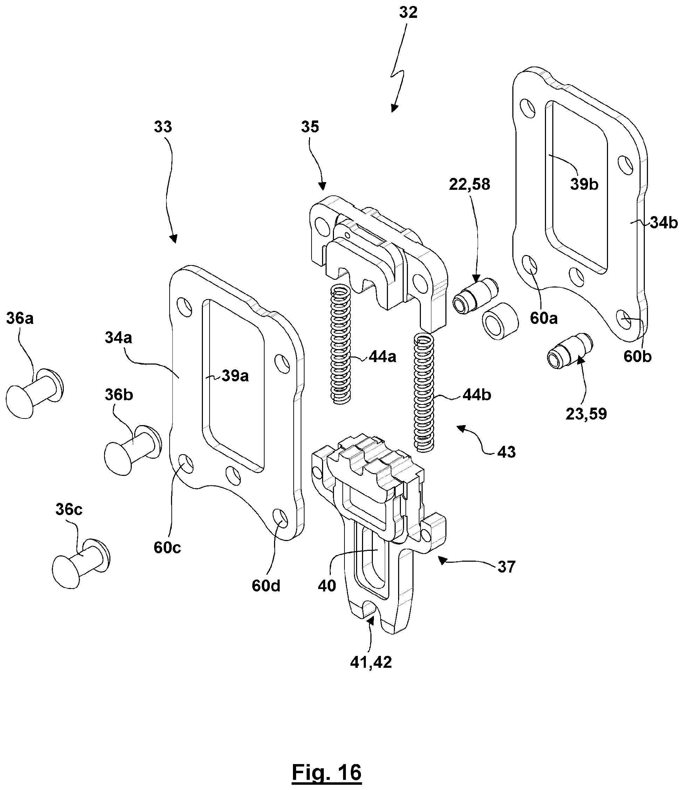

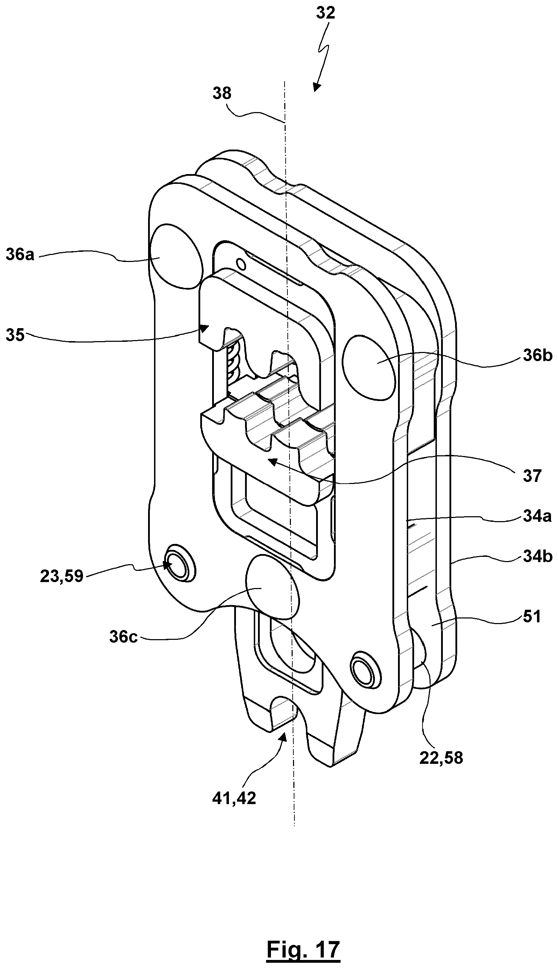

**Fig. 16** **und** **17** zeigen für dieses Ausführungsbeispiel den Zangenkopf 32. Hier weist der Zangenkopfrahmen 33 keine Kopplungsausnehmungen 45, 46 auf. Vielmehr verfügt der Zangenkopfrahmen 33 in dem unteren Endbereich, der in dem montierten Zustand der Zangenbetätigungsbaugruppe 1 zugewandt ist, über Kopplungselemente 22, 23, die als Kopplungsbolzen 58, 59 ausgebildet sind. Vorzugsweise sind die Kopplungsbolzen 58, 59 multifunktional, in dem diese einerseits als Kopplungselemente für die Kopplung mit der Zangenbetätigungsbaugruppe 1 dienen und andererseits der Verbindung der Rahmenplatten 34a, 34b dienen. Für das dargestellte Ausführungsbeispiel sind die Kopplungsbolzen 58, 59 in den beiden Endbereichen abgestuft ausgebildet und finden passgenaue Aufnahme in entsprechenden, hier als Bohrungen ausgebildeten Aufnahmen 60a, 60b, 60c, 60d der Rahmenplatten 34a, 34b.

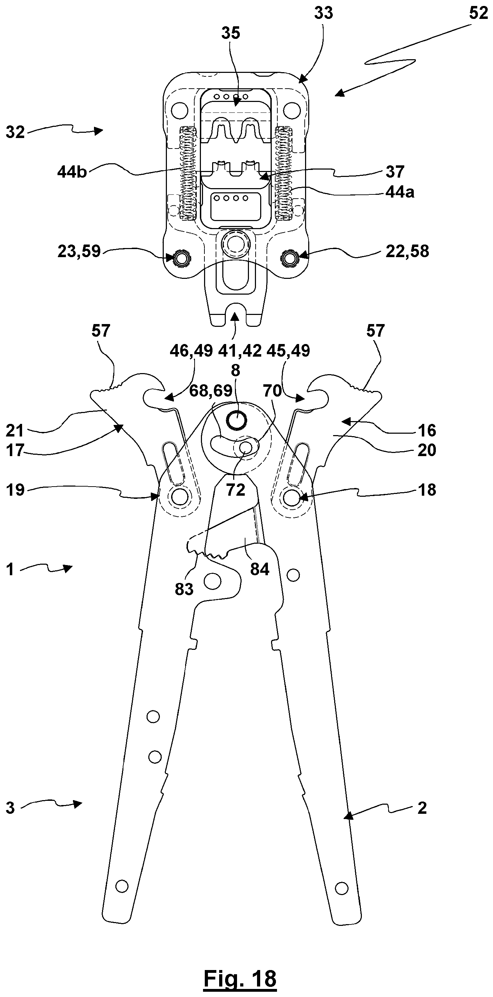

**Fig. 18 bis 21** zeigen die mit dem Zangenkopf 32 und der Zangenbetätigungsbaugruppe 1 gebildete Zange 52 in unterschiedlichen Montagezuständen:
Gemäß Fig. 18 ist Zangenkopf 32 von der Zangenbetätigungsbaugruppe 1 demontiert. Die Schwenkbolzen-Aufnahme 41 des Zangenkopfes 32 ist auf der Zangenbetätigungsbaugruppe1 zugewandten Seite frei zugänglich. Auch der Schwenkbolzen 8 und die Zuglaschen 16, 17 der Zangenbetätigungsbaugruppe 1 sind auf der dem Zangenkopf 32 zugewandten Seite frei zugänglich, wobei die Zuglaschen 16, 17 frei in der Zangenkopfebene verschwenkt werden können.

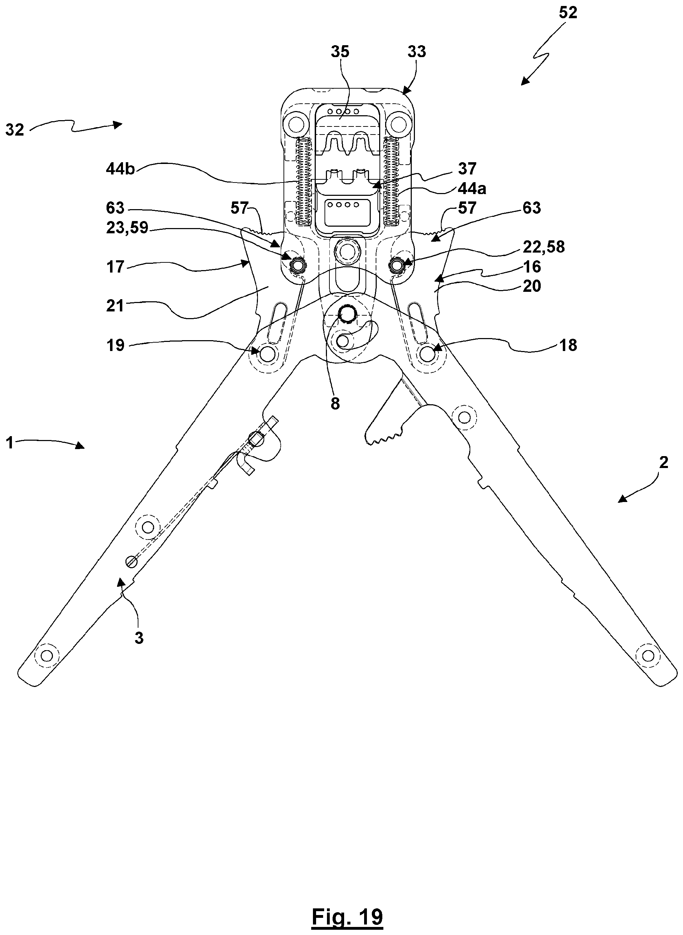

Gemäß **Fig. 19** ist die Zangenbetätigungsbaugruppe 2 so an den Zangenkopf 32 angenähert worden, dass der Schwenkbolzen 8 eintritt in die Schwenkbolzen-Aufnahme 41 und an dem Boden der Schwenkbolzen-Aufnahme 41 zu Anlage kommt. Darüber hinaus sind die Zuglaschen 16, 17 nach innen verschwenkt, womit die Kopplungsbolzen 58, 59 des Zangenkopfes 32 eintreten in die Kopplungsausnehmungen 45, 46 der Zuglaschen 16, 17. Die Länge der Zuglaschen 16, 17 ist dabei derart bemessen, dass dieser Eintritt nur möglich ist, wenn sich die bewegliche Gesenkhälfte 37 in Schließrichtung bewegt unter Beaufschlagung der Federeinrichtung 43. Hinsichtlich des Ausmaßes der Schließbewegung und der hierbei auftretenden Kraftverhältnisse gilt das zu dem ersten Ausführungsbeispiel Gesagte entsprechend.

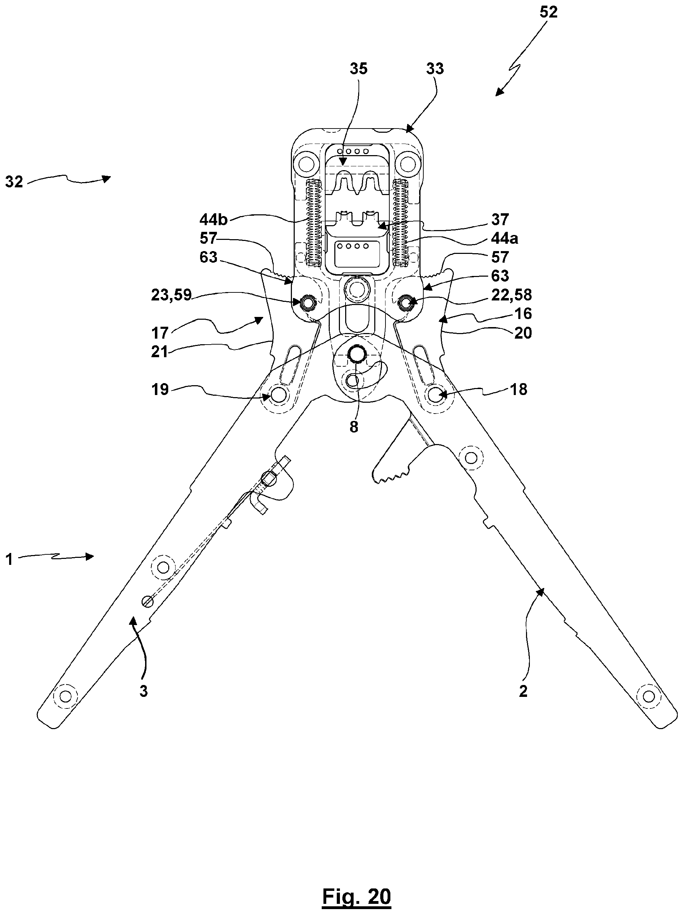

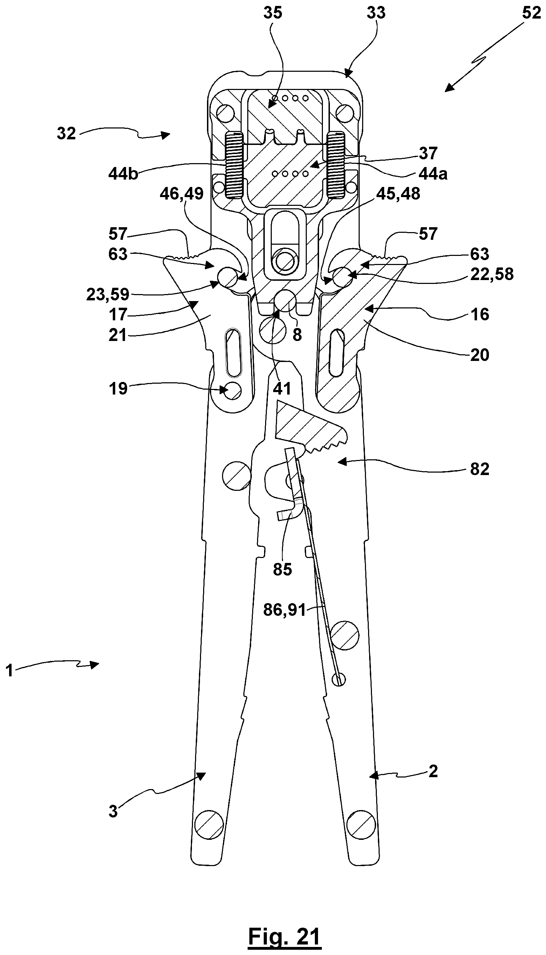

Liegen die Kopplungsbolzen 58, 59 in der vollständig montierten Stellung gemäß **Fig. 20** an dem Boden der Kopplungsausnehmungen 45, 46 an, sichert die Federeinrichtung 43 die derart montierte Stellung. Die Verschwenkung der Handhebel 2, 3 aufeinander zu führt dann zu dem Durchlaufen des Crimp- oder Presshubes, bis die in **Fig. 21** dargestellte Schließstellung erreicht ist.

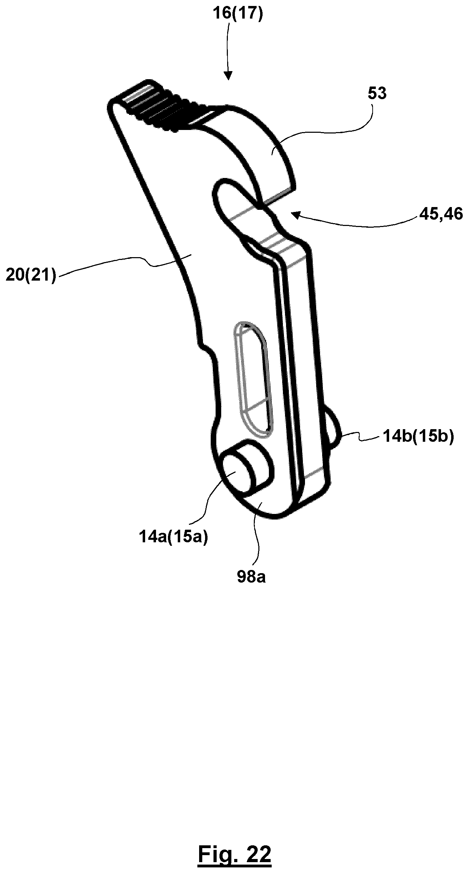

**Fig. 22** zeigt die Zuglaschen 16, 17 als Einzelteil. Die Zuglaschen 16, 17 sind vorzugsweise einstückig ausgebildet mit dem Grundkörper 20, 21 und den Fortsätzen 14, 15 sowie dem Betätigungselement 57. Vorzugsweise sind die Zuglaschen 16, 17 in einem MIN-Herstellungsverfahren hergestellt.

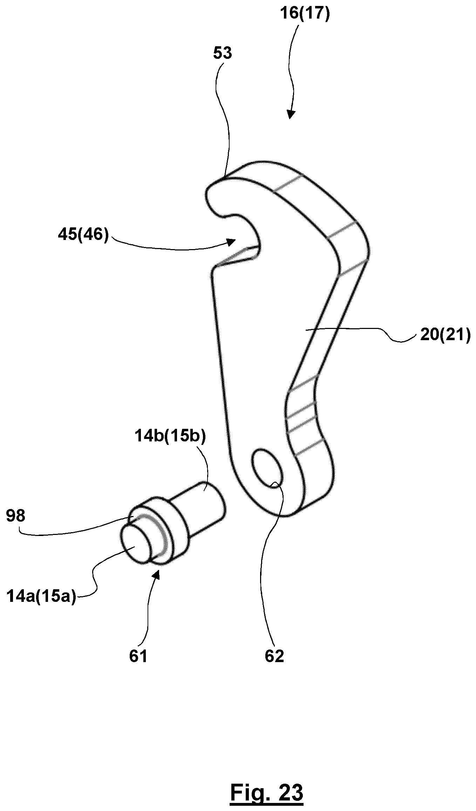

**Fig. 23** zeigt eine alternative Ausgestaltung der Zuglaschen 16, 17, bei denen Grundkörper 20, 21 und ein Schwenkbolzen 61, der die Fortsätze 14, 15 bildet, separat voneinander ausgebildet sind. In diesem Fall kann der Grundkörper 20, 21 beispielsweise als Fräs- oder Stanzteil hergestellt sein. Der Grundkörper 20, 21 verfügt dann über eine Bohrung 62, in welcher der Schwenkbolzen 61 passgenaue Aufnahme, beispielsweise über eine Presspassung, findet.

Auch für dieses Ausführungsbeispiel können die Zuglaschen 16, 17 eine Kontaktfläche 53 aufweisen, die bei dem Hereinschwenken der Zuglaschen 16, 17 zu Anlage kommt an eine Kontaktfläche 54 der beweglichen Gesenkhälfte 53. Durch die Kontaktfläche kann eine Betätigungskraftkomponente erzeugt werden, welche eine Bewegung der beweglichen Gesenkhälfte 37 in Schließrichtung hervorruft, um den Eintritt der Kopplungsbolzen 58, 59 in die Kopplungsausnehmungen 45, 46 zu ermöglichen.

Die Kopplungsausnehmungen 45, 46 und die Kopplungselemente 22, 23 bilden Kopplungseinrichtungen 63, über die der Zangenkopf 32 mit der Zangenbetätigungsbaugruppe 1 (insbesondere ohne Verwendung eines Werkzeugs) montiert und hiervon demontiert werden kann.

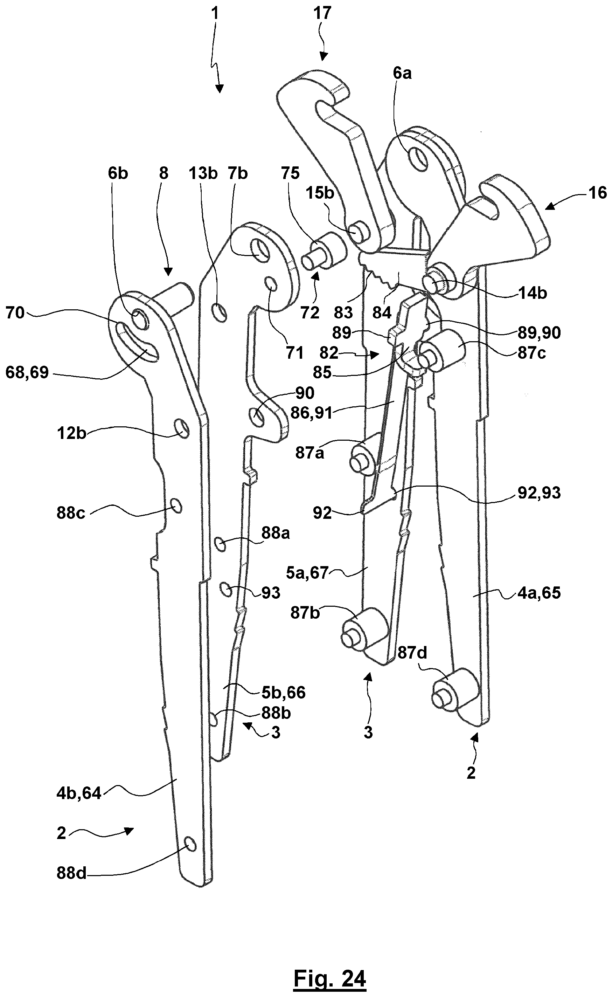

**Fig. 24** zeigt eine Zangenbetätigungsbaugruppe in einer räumlichen Explosionsdarstellung, wobei die Zangenbetätigungsbaugruppe 1 grundsätzlich dem in den Fig. 14 bis 23 beschriebenen Ausführungsbeispiel entspricht. Das Folgende gilt aber auch entsprechend für eine Ausgestaltungsform entsprechend dem Ausführungsbeispiel in Fig. 1 bis 13.

In der Nomenklatur einerseits der Patentansprüche und andererseits der vorangegangenen Figurenbeschreibung bildet die Handhebelplatte 4b des Handhebels 2 eine erste Handhebelplatte 64, die Handhebelplatte 4a des Handhebels 2 eine zweite Handhebelplatte 65, die Handhebelplatte 5b des Handhebels 3 eine dritte Handhebelplatte 66 und die Handhebelplatte 5a des Handhebels 3 eine vierte Handhebelplatte 67.

Die erste Handhebelplatte 64 verfügt über eine Ausnehmung 68 in Form eines Langloches 69. Ein Endbereich des Langloches 69 bildet einen Anschlag 70 aus. Das Langloch 69 verfügt über eine kreisbogenförmig gekrümmte Längsachse, die konzentrisch zu der durch den Schwenkbolzen 8 vorgegebenen Schwenkachse der beiden Handhebel 2, 3 verläuft.

Die dritte Handhebelplatte 66 verfügt über eine Halte- und/oder Führungsausnehmung, die hier als Halte- und/oder Führungsbohrung 71 ausgebildet ist. Der Abstand der Halte- und/oder Führungsbohrung 71 von der durch den Schwenkbolzen 8 vorgegebenen Schwenkachse entspricht dem Abstand des Langloches 69 von der durch den Schwenkbolzen 8 vorgegebenen Schwenkachse.

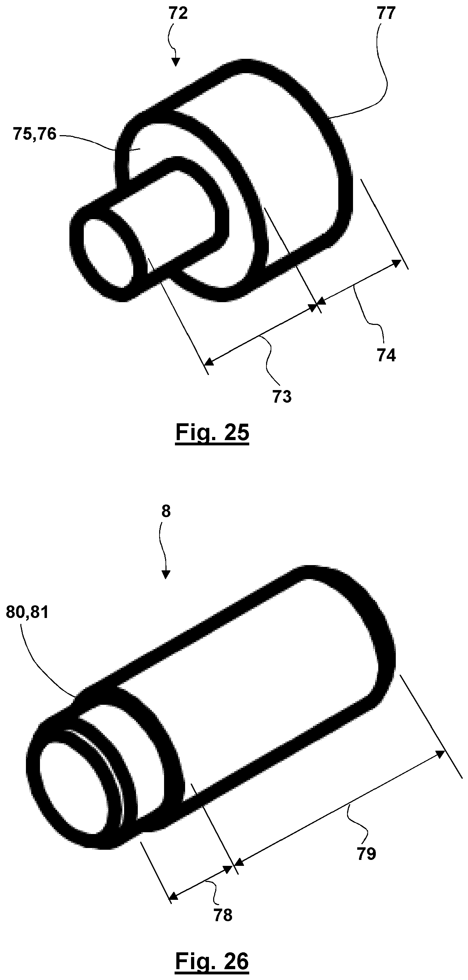

**Fig. 25** zeigt ein Anschlagteil 72. Das Anschlagteil 72 verfügt über oder besteht aus einem ersten zylindrischen Längsabschnitt 73 mit einem ersten Durchmesser und einem zweiten zylindrischen Längsabschnitt 74 mit einem zweiten Durchmesser, der größer ist als der erste Durchmesser. Die Längsabschnitte 73, 74 sind koaxial zueinander angeordnet. Der Übergang von dem ersten Längsabschnitt 73 zu dem zweiten Längsabschnitt 74 erfolgt über einen Absatz 75, der hier von einer Kreisringfläche 76 ausgebildet wird. Mit der Montage wird der erste Längsabschnitt 73 von innen, d. h. von der Seite der zweiten und vierten Handhebelplatte 65, 67 in die Halte- und/oder Führungsbohrung 71 eingesteckt, womit insbesondere eine radiale Führung des Anschlagteils 71 erfolgt und eine Vorgabe der Position des Anschlagteils 72 in der Schwenkebene der Handhebel 2, 3 erfolgt sowie eine Vorgabe der Orientierung des Anschlagteils 72 vertikal zu dieser Schwenkebene erfolgt. Das Anschlagteil 72 wird so weit in die Halte- und/oder Führungsbohrung 71 eingesteckt, dass der Absatz 72 auf der innenliegenden Seite der dritten Handhebelplatte 66, also auf der den Handhebelplatten 65, 67 zugewandten Seite an die dritte Handhebelbelplatte 66 zur Anlage kommt, womit der freie Endbereich des ersten Längsabschnittes 73 aus der dritten Handhebelplatte 66 heraussteht und in dem Langloch 69 angeordnet ist. Vorzugsweise ist die Stirnseite des ersten Längsabschnittes 73 bündig zu der Außenfläche der ersten Handhebelplatte 64 angeordnet.

Die freie Stirnfläche des zweiten Längsabschnittes 74 bildet eine (hier kreisförmige) Abstützfläche 77. In dem montierten Zustand der Zangenbetätigungsbaugruppe 1 liegt die Abstützfläche 77 an der zweiten Handhebelplatte 65 an. In die Einsteckrichtung des Anschlagteils 72 in die dritte Handhebelplatte 66 ist in dem montierten Zustand das Anschlagteil 72 durch die Anlage des Absatzes 75 an der dritten Handhebelplatte 66 gesichert, während eine Sicherung in die entgegengesetzte Richtung durch die Anlage der Abstützfläche 77 an der zweiten Handhebelplatte 65 erfolgt, so dass das Anschlagteil 72 zwischen der zweiten Handhebelplatte 65 und der dritten Handhebelplatte 66 gefangen ist.

**Fig. 26** zeigt in einer räumlichen Darstellung den Schwenkbolzen 8. Zu erkennen ist hier, dass der Schwenkbolzen 8 einen ersten zylindrischen Längsabschnitt 78 sowie einen zweiten zylindrischen Längsabschnitt 79 aufweist, die über einen Absatz 80, der als Kreisringfläche 81 ausgebildet ist, voneinander getrennt sind.

Bei der Montage der Zangenbetätigungsbaugruppe 1 wird der Schwenkbolzen 8 mit dem ersten Längsabschnitt 78 in das Lagerauge 6b eingeführt, bis die Kreisringfläche 81 auf der Innenseite zur Anlage kommt an die erste Handhebelplatte 64. Hieran anschließend werden die zweite, dritte und vierte Handhebelplatte 65 ,66, 67 auf den Schwenkbolzen 8 mit den Lageraugen 7b, 6a, 7a aufgeschoben.

Für das dargestellte Ausführungsbeispiel verfügt die Zangenbetätigungsbaugruppe 1 über ein Zwangsgesperre 82. Ein derartiges Zwangsgesperre 82 dient der Gewährleistung, dass in mehreren Teilstufen eine einmal erreichte Teilschließstellung der Handhebel 2, 3 während des Press- oder Crimphubes gesichert wird, so dass auch bei einer Verringerung der auf die Handhebel 2, 3 applizierten Handkräfte keine Öffnungsbewegung der Handhebel 2, 3 möglich ist. Vielmehr ermöglicht das Zwangsgesperre 82 eine Öffnungsbewegung der Handhebel 2, 3 lediglich dann, wenn der Press- oder Crimphub vollständig oder bis zu einer definierten Schließstellung durchlaufen ist.

Das Zwangsgesperre 82 verfügt über Verzahnung 83, die hier von einem Fortsatz 84 der zweiten Handhebelplatte 65 ausgebildet ist. Des Weiteren verfügt das Zwangsgesperre 82 über eine Sperrklinke 85. Die Sperrklinke 85 ist verschwenkbar gelagert und von einer Feder 86 beaufschlagt. Die Sperrklinke 85 wirkt mit der Verzahnung 83 derart zusammen, dass die Sperrklinke 85 während der Schließbewegung der Handhebel 2, 3 mit dem Erreichen einer zu sichernden Teilschließstellung ratschenartig einen Zahn der Verzahnung 83 passiert hat, während die Sperrklinke 85 durch geeignete Abstützung an dem passierten Zahn eine Öffnungsbewegung blockiert. Hat nach dem Durchlaufen des Schließhubes die Sperrklinke 85 sämtliche Zähne der Verzahnung 83 passiert, kann die Sperrklinke 85 umklappen, womit dann die Sperrklinke 85 während einer dann ermöglichten Öffnungsbewegung ratschenartig die Verzahnung 83 der Handhebel 2, 3 passieren kann.

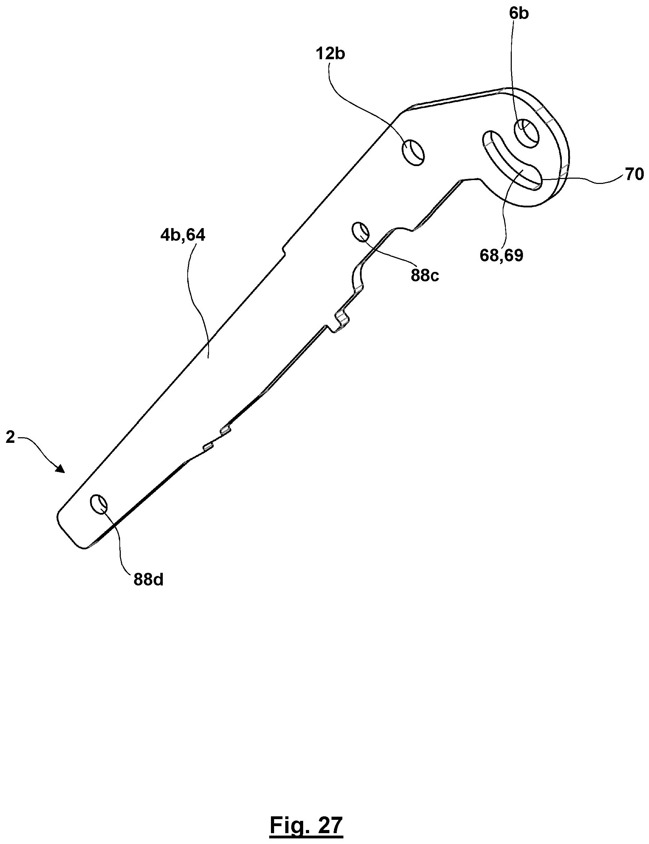

Im Folgenden wird die Montage der Zangenbetätigungsbaugruppe 1 beschrieben, wobei das Entsprechende für die in den Fig. 1-23 dargestellten Ausführungsbeispiele gilt:
Die Montage beginnt mit der Bereitstellung der ersten Handhebelplatte 64 (vgl. **Fig. 27**).

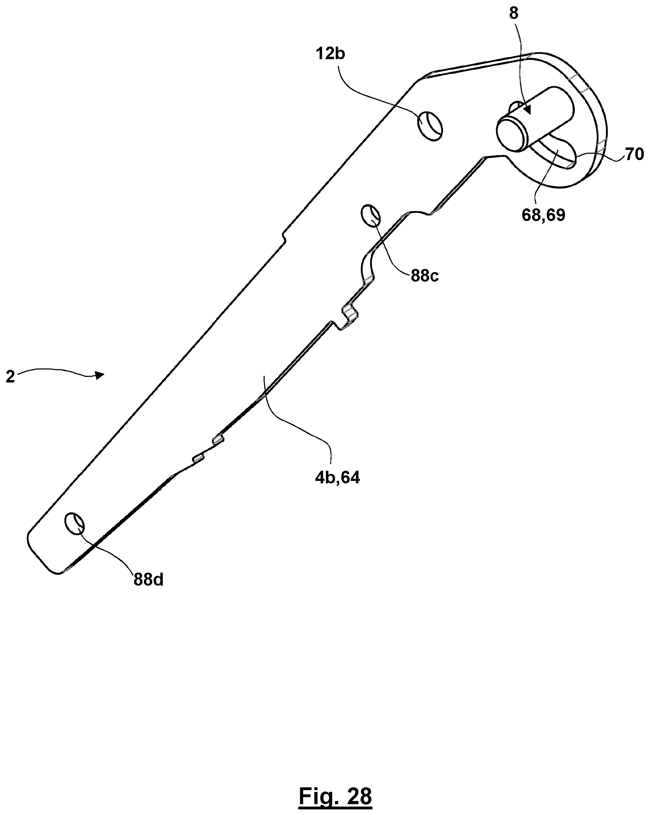

In das Lagerauge 6b der ersten Handhebelplatte 64 wird dann von der Innenseite der ersten Handhebelplatte 64 der erste Längsabschnitt 78 des Schwenkbolzens 8 einsetzt, bis der Absatz 80 des Schwenkbolzens 8 zur Anlage an die Handhebelplatte 64 kommt (vgl. **Fig. 28**).

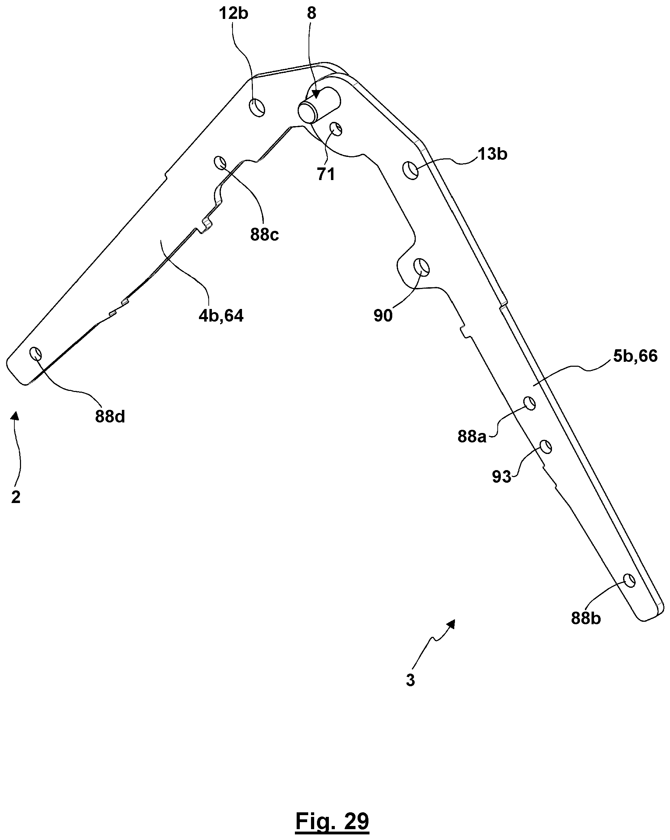

Hieran anschließend wird die dritte Handhebelplatte 66 von der Innenseite auf den Schwenkbolzen 8 aufgeschoben, womit der Schwenkbolzen 8 in das Lagerauge 7b eintritt. **Fig. 29** zeigt die Endstellung der dritten Handhebelplatte 66, in welcher die erste und dritte Handhebelplatte 64, 66 gleitend unter Führung durch den Schwenkbolzen 8 aneinander anliegen.

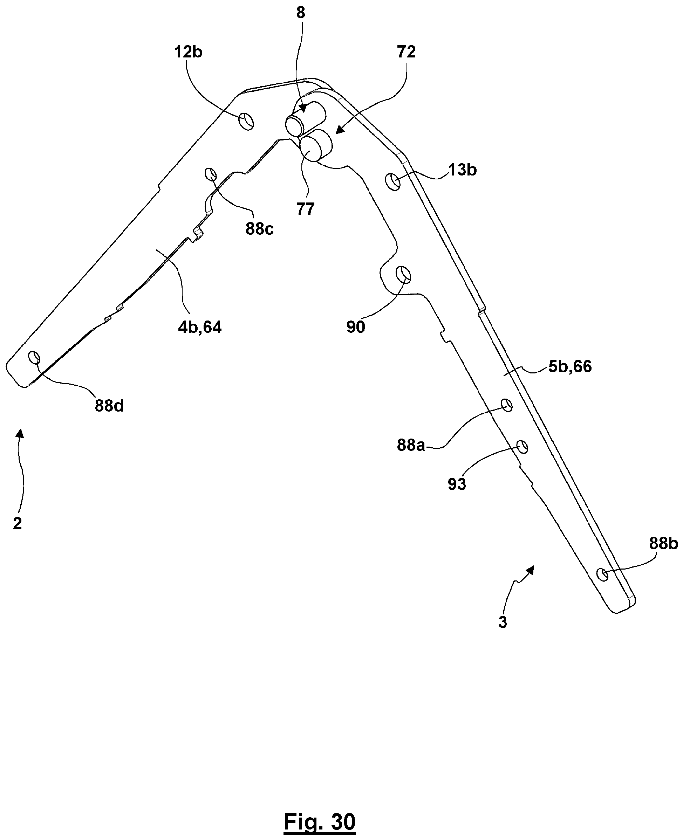

Im nächsten Montageschritt wird der erste Längsabschnitt 73 des Anschlagteils 72 von der Innenseite in die Halte- und/oder Führungsbohrung 71 eingeführt und durch diese hindurchgeführt, bis der freie Endbereich des ersten Längsabschnitts 73 in dem Langloch 69 Aufnahme findet (vgl. **Fig. 30**).

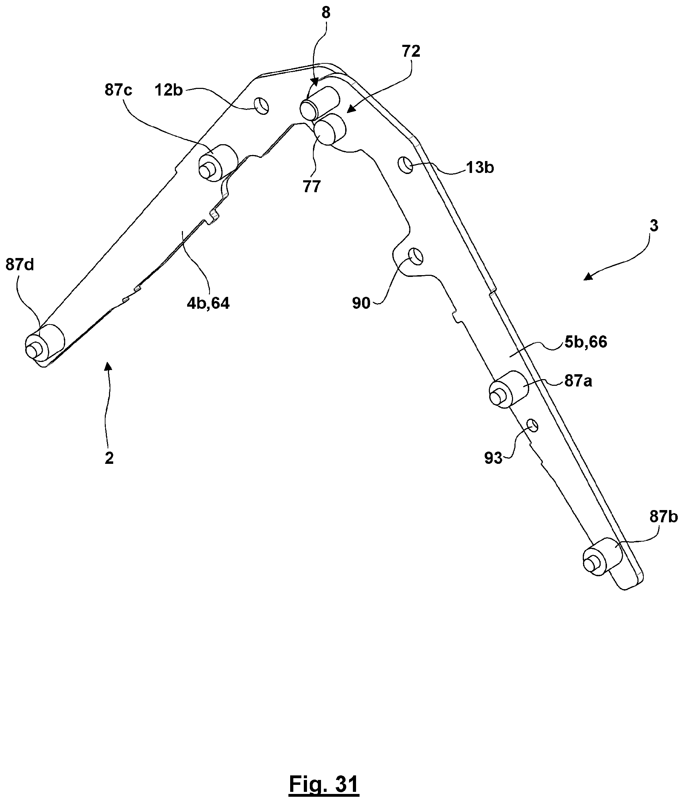

Gemäß **Fig. 31** werden dann Abstandshalter 87a, 87b, 87c, 87d in Aufnahmen 88a, 88b, 88c, 88d eingesetzt. Für das dargestellte Ausführungsbeispiel verfügen die Abstandshalter 87 jeweils über einen mittigen zylindrischen Längsabschnitt, dessen Längserstreckung den Abstand der zweiten Handhebelplatte 65 von der dritten Handhebelplatte 66 vorgibt, und über zylindrische endseitige Längsabschnitten, die Zapfen bilden, die in den als Bohrungen ausgebildeten Aufnahmen 88 der Handhebelplatten 64, 66 (und später auch der Handhebelplatten 65, 67) aufgenommen werden. Hierbei verfügen die Zapfen über einen kleineren Durchmesser als der mittige Längsabschnitt, so dass der Übergang von dem mittigen Längsabschnitt zu den Zapfen über einen Absatz, hier in Form einer Kreisringfläche, erfolgt. Diese Absätze sind dann zwischen der zweiten und dritten Handhebelplatte 65, 66 gefangen, womit die Abstandshalter 87 zwischen den Handhebelplatten 65, 66 gegenüber einer Demontage in eine Richtung vertikal zur Schwenkebene der Handhebel 2, 3 gesichert sind. Die Abstandshalter 87 geben dann den Zwischenraum zwischen den Paaren der relativ zueinander verschwenkbaren Handhebelplatten 64, 66 sowie 65,67 vor.

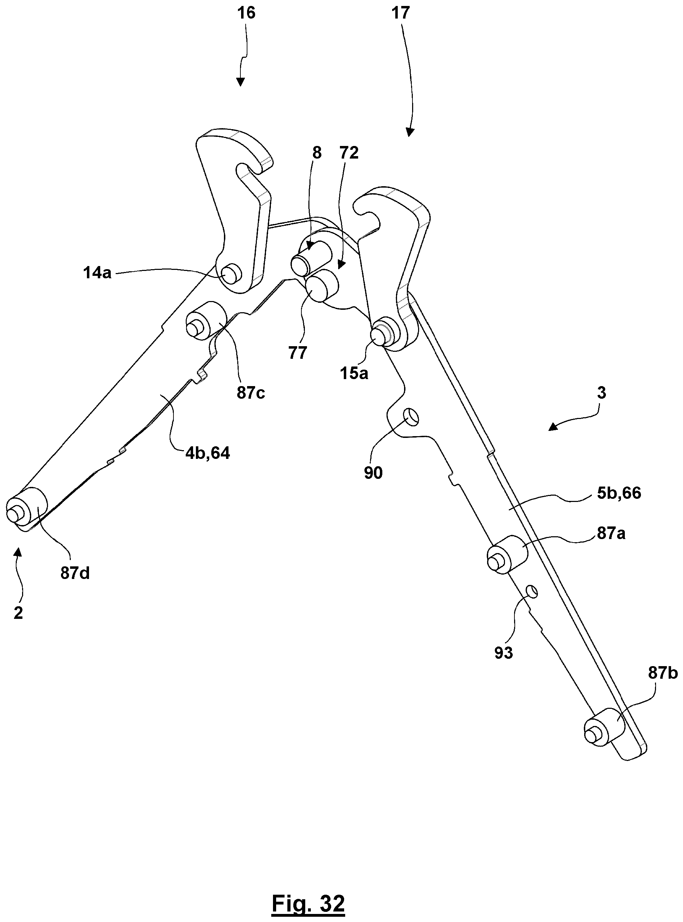

Gemäß **Fig. 32** erfolgt dann ein Einsetzen der Fortsätze 14b, 15b der Zuglaschen 16, 17 in die Aufnahmen 12b, 13b.

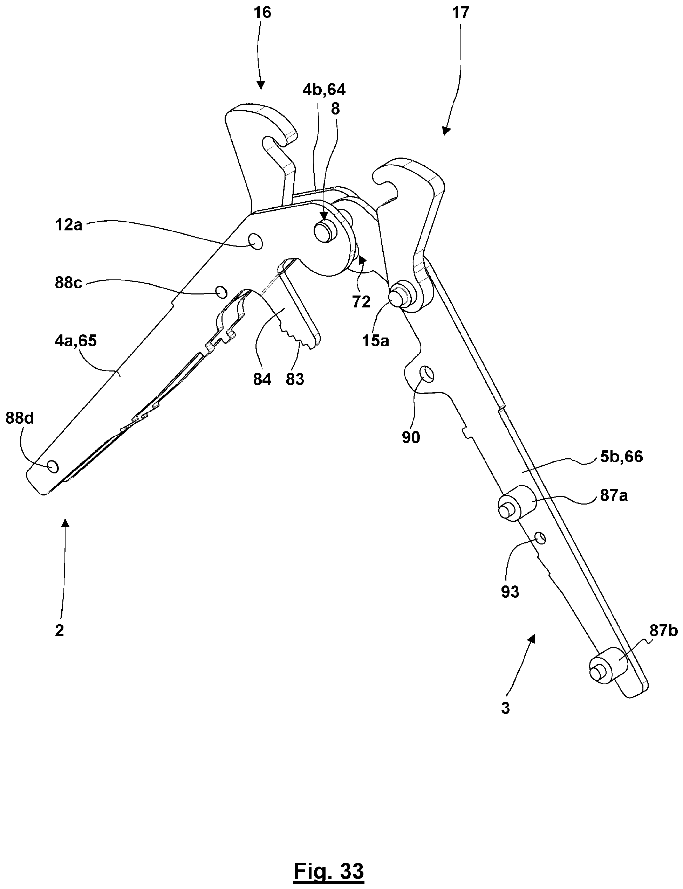

In dem nächsten Montageschritt erfolgt dann das Fügen der zweiten Handhebelplatte 65. Während dieses Fügens wird das Lagerauge 6a der zweiten Handhebelplatte 65 auf den Schwenkbolzen 8 aufgeschoben. Gleichzeitig tritt der Fortsatz 14a ein in die Aufnahme 12a der zweiten Handhebelplatte 65 und die Zapfen der Abstandshalter 87a, 87b treten ein in die Aufnahmen 88c, 88d der zweiten Handhebelplatte 65. Der dann erreichte Montagezustand ist in **Fig. 33** dargestellt.

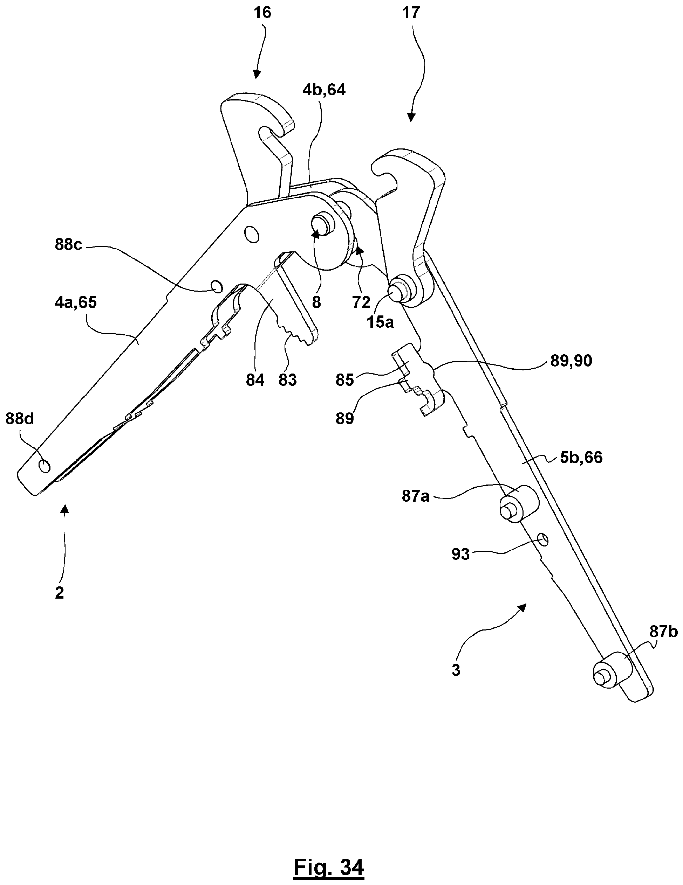

In dem nächsten Montageschritt erfolgt die Montage der Sperrklinke 85 mit der dritten Handhebelplatte 66, indem ein Fortsatz 89 der Sperrklinke 85 Aufnahme findet in einer Aufnahme 90 der dritten Handhebelplatte 66 (vgl. **Fig. 34**).

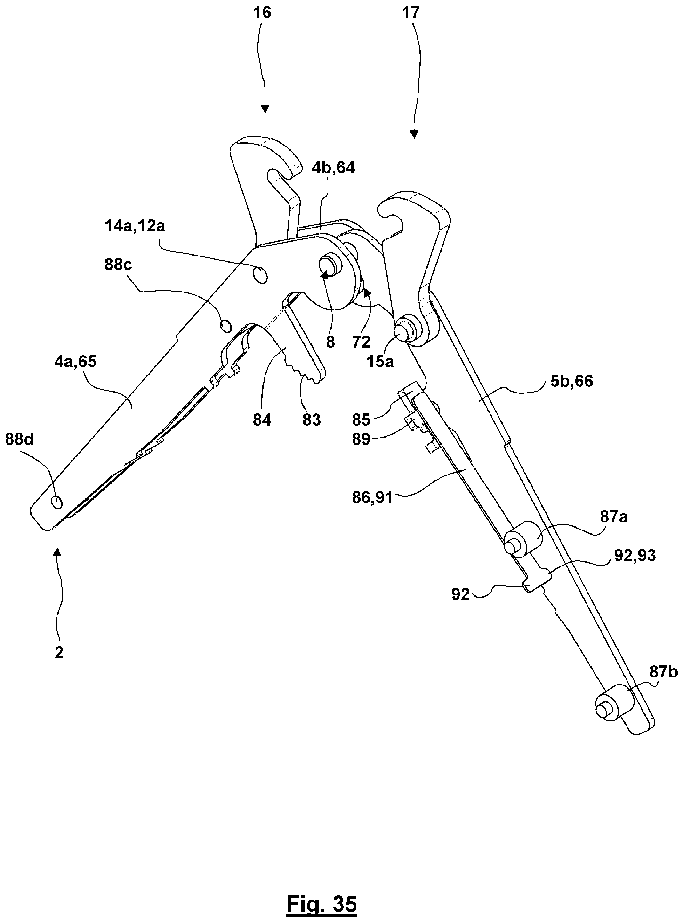

Hieran anschließend erfolgt eine Montage der Feder 86. Für das dargestellte Ausführungsbeispiel ist die Feder 86 T-förmig ausgebildet, wobei der Vertikalschenkel des T eine Blattfeder 91 ausbildet und die beiden Horizontalschenkel des T jeweils einen Fortsatz 92 ausbilden. Ein Fortsatz 92 findet Aufnahme in einer Aufnahme 93 der dritten Handhebelplatte 66. Des Weiteren ist die Feder 86 benachbart dem Fortsatz 92 an einem Abstandshalter 87 in Biegerichtung der Blattfeder 91 abgestützt. Die Blattfeder 91 kragt frei aus und ist in dem dem Fortsatz 92 abgewandten Endbereich an der Sperrklinke 85 unter Beaufschlagung derselben abgestützt (vgl. **Fig. 35**).

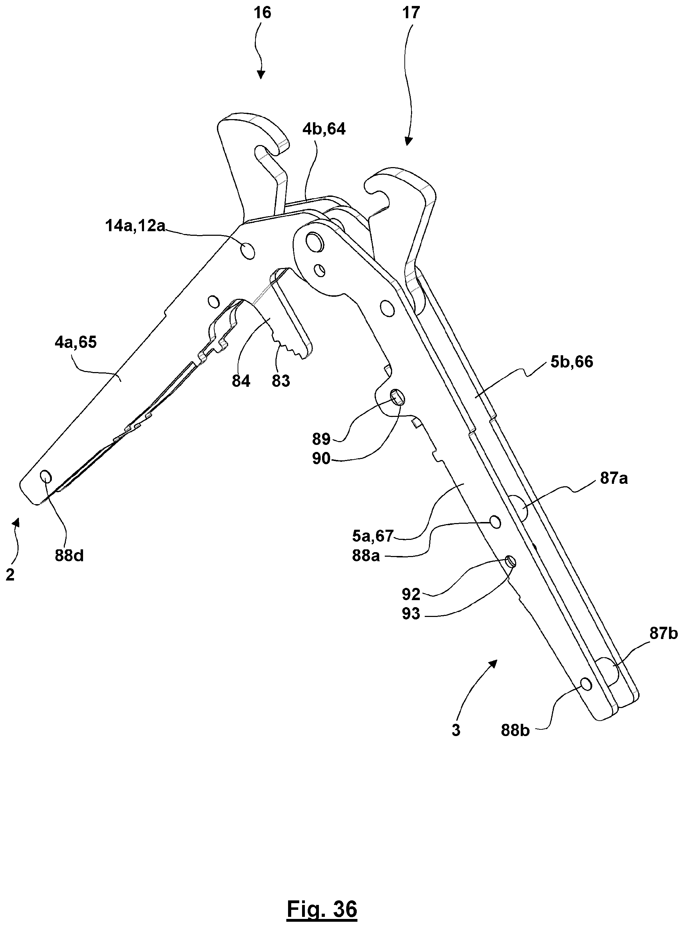

Hieran anschließend erfolgt ein Aufstecken der vierten Handhebelplatte 67 auf den Schwenkbolzen 8. Mit diesem Aufstecken treten Zapfen der Abstandshalter 87c, 87d in Aufnahmen 88a, 88b der vierten Handhebelplatte 67 ein, ein weiterer Fortsatz 89 der Sperrklinke 85 tritt in eine Aufnahme 90 der vierten Handhebelplatte 67 ein und ein Fortsatz 15a tritt ein in eine Aufnahme 13a der vierten Handhebelplatte 67 (vgl. **Fig. 36**).

In dem derart erreichten Montagezustand (oder auch teilweise bereits zuvor) erfolgt dann eine Fixierung der Handhebelplatten 64, 65, 66, 67. Dies erfolgt bspw. durch Verpressen der Abstandshalter 87 in den Aufnahmen der Handhebelplatten 64, 65, 66, 67. Zusätzlich kann auch ein Verpressen des Schwenkbolzens 8 erfolgen, was aber unter Aufrechterhaltung des Schwenk-Freiheitsgrads der Handhebel 2, 3 erfolgen muss.

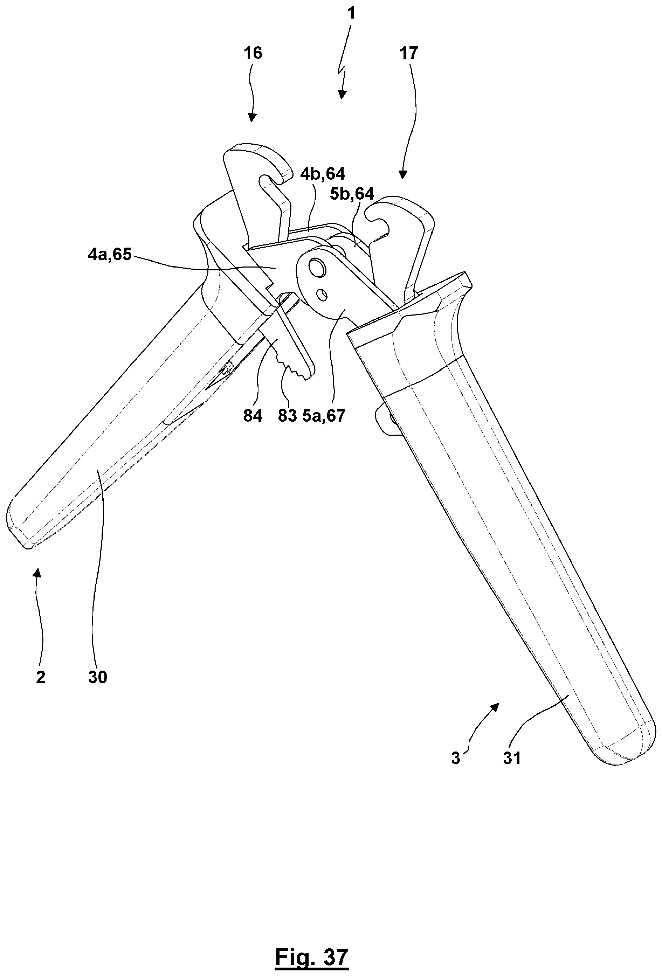

Schließlich werden auf die Handhebelplatten 64, 65, 66, 67 die Griffe 30, 31 aufgeschoben **(****Fig. 37****).**

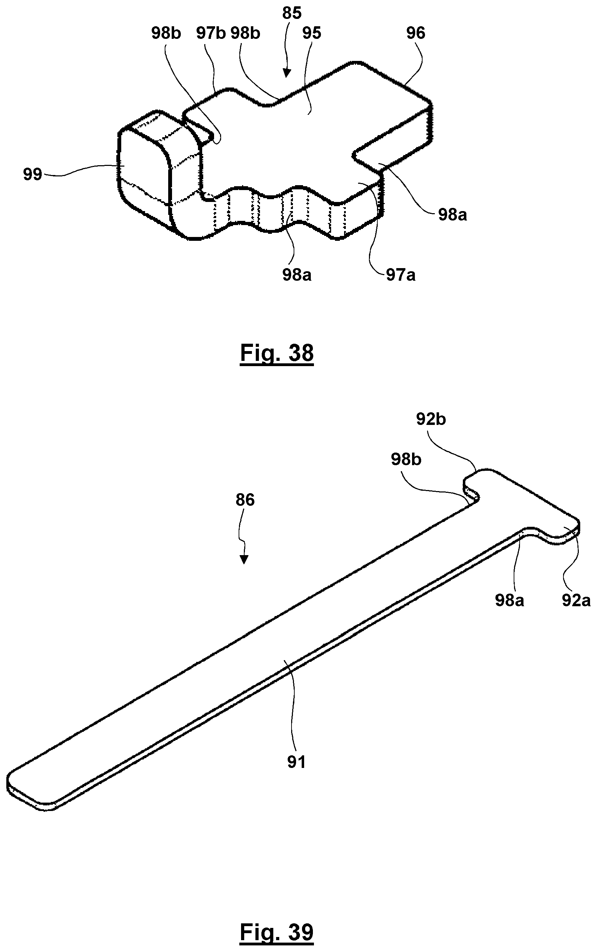

**Fig. 38** zeigt in einer räumlichen Darstellung eine Sperrklinke 85. Die Sperrklinke 85 ist aus einem gebogenen Metallblech hergestellt. Die Sperrklinke 85 ist einstückig ausgebildet mit einem Grundkörper 95, einem Eingriffsteil 96, fluchtenden Fortsätzen 97a, 97b, die über Absätze 98a, 98b in den Grundkörper 95 übergehen, und einem abgewinkelten Entriegelungsteil 99.

**Fig. 39** zeigt in einer räumlichen Einzelteildarstellung die Feder 86, die T-förmig ausgebildet ist mit zwei fluchtenden Fortsätzen 92a, 92b und einer Blattfeder 91.

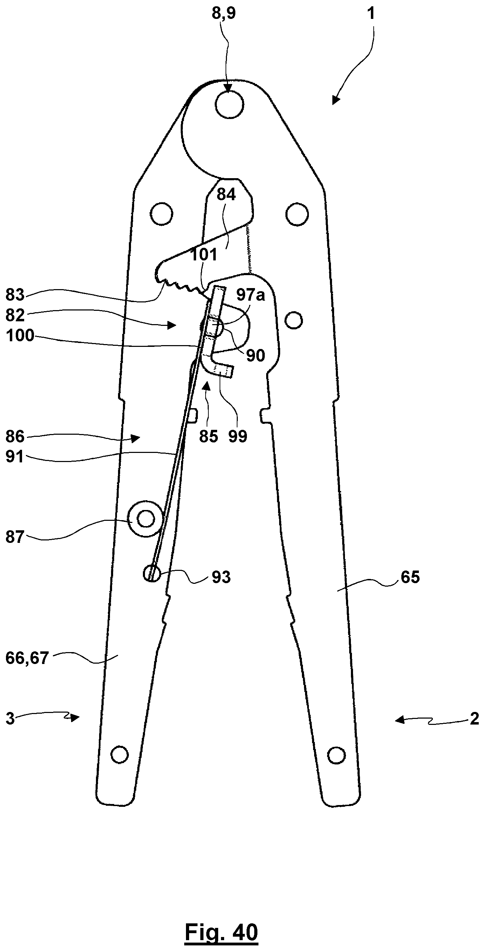

**Fig. 40** zeigt eine Zangenbetätigungsbaugruppe 1 in einem teilgeschnittenen oder teilmontiertem Zustand. Die Fortsätze 92a, 92b sind in den Aufnahmen 93 der dritten und vierten Handhebelplatte 66, 67 aufgenommen, womit ein Federfußpunkt der Blattfeder 91 verschwenkbar an den Handhebelplatten 66, 67 festgelegt ist. Benachbart diesem Federfußpunkt ist die Blattfeder 91 abgestützt an der zylindrischen Mantelfläche eines Abstandshalters 87.

Die Fortsätze 97a, 97b der Sperrklinke 85 sind aufgenommen in den Aufnahmen 90 der Handhebelplatten 66, 67, womit ein Schwenklager gebildet ist. Auf einer Seite des Grundkörpers 95 der Sperrklinke 85 ist der frei über den Abstandshalter 87 auskragende Endbereich der Blattfeder 91 abgestützt, indem die Blattfeder 91 lose an dem Grundkörper 95 anliegt. Die Kontaktfläche zwischen der Sperrklinke 85 und der Blattfeder 91 bildet ein Angriffsteil 100 der Sperrklinke 85, über die die Feder 86 auf die Sperrklinke 85 einwirkt.

Fig. 40 zeigt die Sperrklinke 85 und die Feder 86 in einer Zwischenstellung, in welcher die Beaufschlagung der Feder 86 minimal ist. Die Zwischenstellung entspricht hierbei der Schließstellung der Handhebel 2, 3, in der die Sperrklinke 85 vollständig die Verzahnung 83 der Handhebelplatte 65 passiert hat.

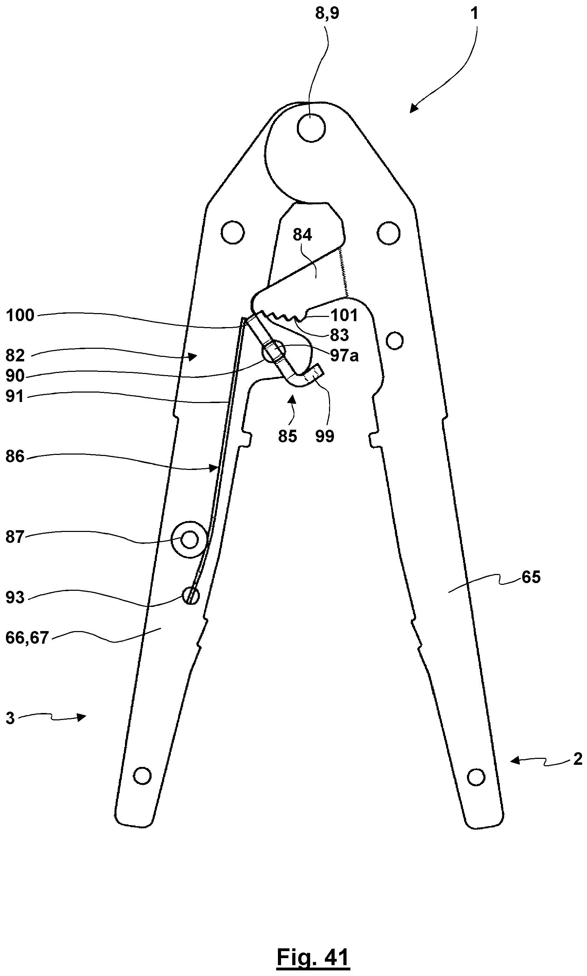

**Fig. 41** zeigt die Zangenbetätigungsgruppe 1 zu Beginn des Schließhubs der Handhebel 2, 3, wobei sich die Feder 86 und die Sperrklinke 85 in einer Sicherungsstellung befinden. In der Sicherungsstellung kann sich bei einer Schließbewegung der Handhebel 2, 3 die Sperrklinke 85 mit dem Eingriffsteil 96 ratschenartig entlang der Verzahnung 83 bewegen. Der Eingriff des Eingriffsteils 96 in die Verzahnung 83 blockiert dabei eine Öffnungsbewegung der Handhebel 2, 3, wenn eine durch die Verzahnung 83 vorgegebene Teilschließstellung erreicht ist. Gegenüber der Zwischenstellung in Fig. 40 ist die Durchbiegung der Blattfeder 91 vergrößert. Am Ende der Schließbewegung der Handhebel ausgehend von Fig. 41 wird die Zwischenstellung gemäß Fig. 40 erreicht.

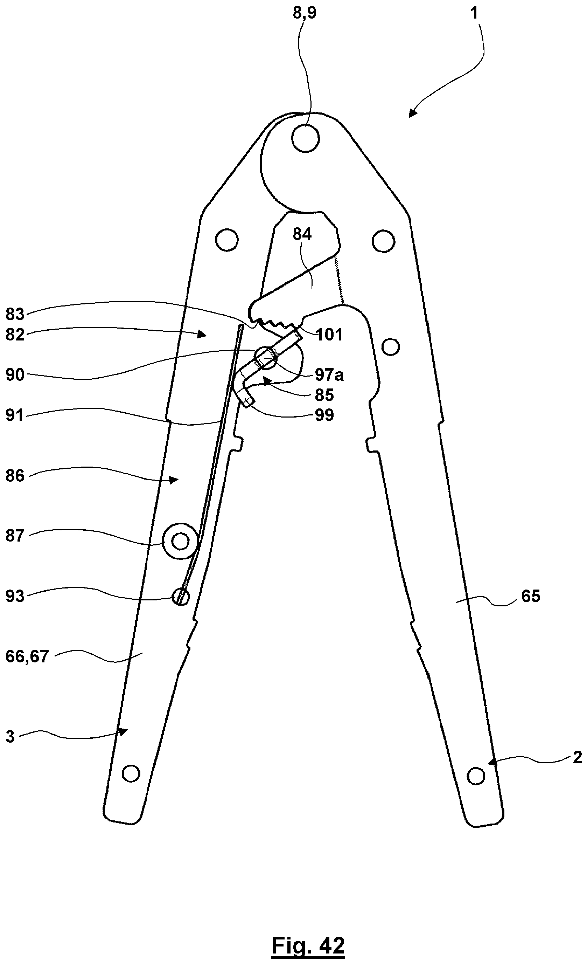

Erfolgt ausgehend von der Zwischenstellung gemäße Fig. 40, die Öffnungsbewegung der Handhebel 2, 3, wird die Sperrklinke 85 durch eine Umklappschräge 101, die im Endbereich der Verzahnung 83 angeordnet ist, in eine Richtung umgeklappt, die entgegengesetzt zu der Umklappung von der Zwischenstellung in die Sicherungsstellung gemäß Fig. 41 ist. In der so erreichten Freigabestellung gemäß **Fig. 42** kann mit der Öffnungsbewegung der Handhebel 2, 3 das Eingriffsteil 96 ratschenartig entlang der Verzahnung 83 bewegt werden.

Ausgehend von der Zwischenstellung gemäß Fig. 40 erfolgt die Durchbiegung für die Bewegung in Richtung der Sicherungsstellung gemäß Fig. 41 und in Richtung der Freigabestellung gemäß Fig. 42 der Blattfeder 91 in dieselbe Richtung. Die Beaufschlagung der Blattfeder 91 ist minimal für die Zwischenstellung gemäß Fig. 40 und steigt jeweils in Richtung der Sicherungsstellung gemäß Fig. 41 sowie in Richtung der Freigabestellung gemäß Fig. 42 an, wobei die Beaufschlagung in der Sicherungsstellung gemäß Fig. 41 und der Freigabestellung gemäß Fig. 42 gleich sein kann oder unterschiedlich sein kann. Zu erkennen ist in den Fig. 41, 42, dass die Blattfeder 91 in der Sicherungsstellung und der Freigabestellung exzentrisch zu der Schwenkachse der Sperrklinke 85 unterschiedlichen Orten oder Bereichen an der Sperrklinke 85 anliegt, wobei in der Sicherungsstellung einerseits und in der Freigabestellung andererseits die Anlagefläche und damit das Angriffsteil 100 auf unterschiedlichen Seiten von der Schwenkachse angeordnet ist.

Soll eine Notentriegelung des Zwangsgesperres 82 erfolgen, kann der Benutzer diese vornehmen, indem der Benutzer manuell eine Stellung der Sperrklinke 85 verändert, in dem der Benutzer mit einem Finger unmittelbar auf das abgewinkelte Entriegelungsteil 99 einwirkt.

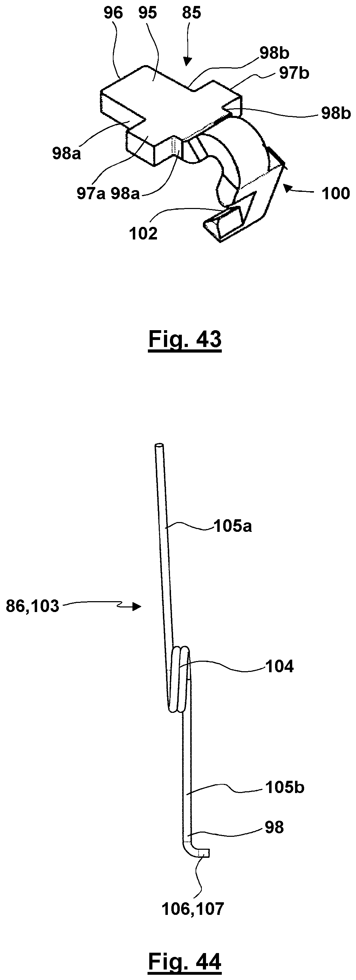

Für das in **Fig. 43** dargestellte Ausführungsbeispiel verfügt die Sperrklinke 85, die hier ebenfalls als einstückiges gebogenes Metallblech ausgebildet ist, im Bereich einer Abwinklung über das Angriffsteil 100, welches in diesem Fall als randoffene, beispielsweise u-förmige, seitlich offene Ausnehmung 102 ausgebildet ist. In der Ausnehmung 102 kann, wie im Folgenden noch erläutert wird, ein Endbereich der Feder 86 angeordnet sein. Vorzugsweise ist das Blech im Bereich der Ausnehmung 102 mit einer Phase, Abschrägung oder einer Art Schneide im Bereich der beiden seitlichen Begrenzungen der Ausnehmung 102 ausgebildet, womit unterschiedliche Winkel zwischen der Feder 86 und der Sperrklinke 85 ermöglicht sind und eine Art Schwenklagerverbindung (mit einem begrenzten Schwenkwinkel) gebildet ist.

Gemäß **Fig. 44** ist die Feder 86 als Schenkelfeder 103 ausgebildet. Die Schenkelfeder 103 ist aus einem Federdraht hergestellt. Die Schenkelfeder 103 verfügt über eine Wicklung 104 mit konstantem Durchmesser und einem beliebigen Wickelwinkel, wobei für das dargestellte Ausführungsbeispiel die Wicklung 104 über einen Wickelwinkel von bspw. 720° gewickelt ist. Von der Wicklung 104 erstrecken sich zwei Schenkel 105a, 105b in entgegengesetzte Richtungen, wobei die Schenkel 105a, 105b koaxial oder parallel zueinander orientiert sein können oder in entspanntem Zustand der Feder 86 einen beliebigen Winkel bilden können. Der der Wicklung 104 abgewandte Endbereich des Schenkels 105b ist mit einer Abwinklung 106 ausgestattet, die einen Fortsatz 107 bildet. Die Abwinklung 106 und der Fortsatz 107 sind vertikal zur Biegeebene und Bewegungsebene der Schenkel 105a, 105b und zu der Schwenkebene der Handhebel 2, 3 orientiert.

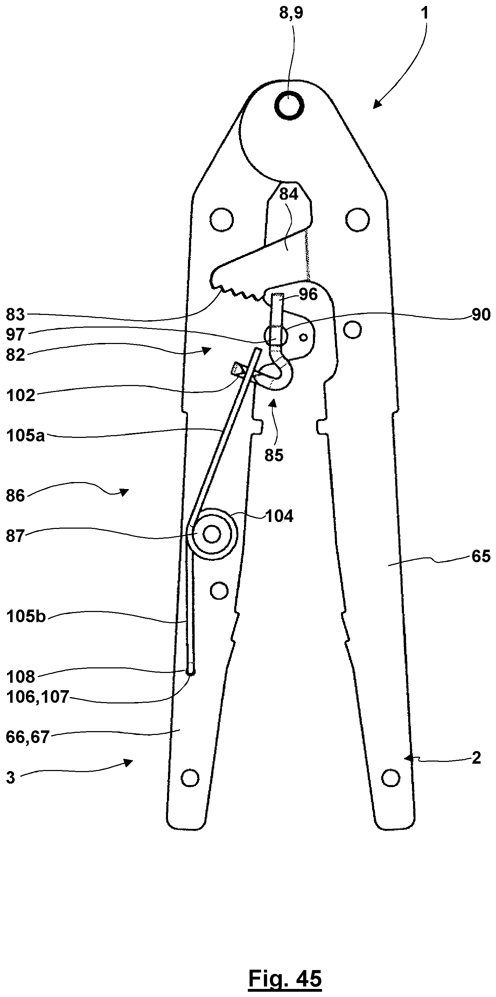

**Fig. 45** zeigt eine teilmontierte oder teilgeschnittene Zangenbetätigungsbaugruppe 1 mit einem Zwangsgesperre 82 mit der Sperrklinke 85 gemäß Fig. 43 und der Feder 86 gemäß Fig. 44. Zu erkennen ist, dass sich die Wicklung 104 um einen Abstandshalter 87 herum erstreckt, womit die Schenkelfeder 103 im Bereich der Wicklung 104 drehbar an den Handhebelplatte 66, 67 gelagert ist. Möglich ist aber auch, dass der Abstandshalter 87 von der Wicklung 104 elastisch eingespannt ist. Der von der Abwinklung 106 gebildete Fortsatz 107 findet Aufnahme in einer von der Handhebelplatte 66 gebildeten Aufnahme 108, die hier als Bohrung ausgebildet ist. Der freie Endbereich des anderen Schenkels 105a ist aufgenommen in der Ausnehmung 102 der Sperrklinke 85. In der Zwischenstellung gemäß Fig. 45, in der die Sperrklinke 85 vollständig die Verzahnung 83 passiert hat, und die Schließstellung der Handhebel 2, 3 erreicht ist, ist die Schenkelfeder 103 nicht vorgespannt.

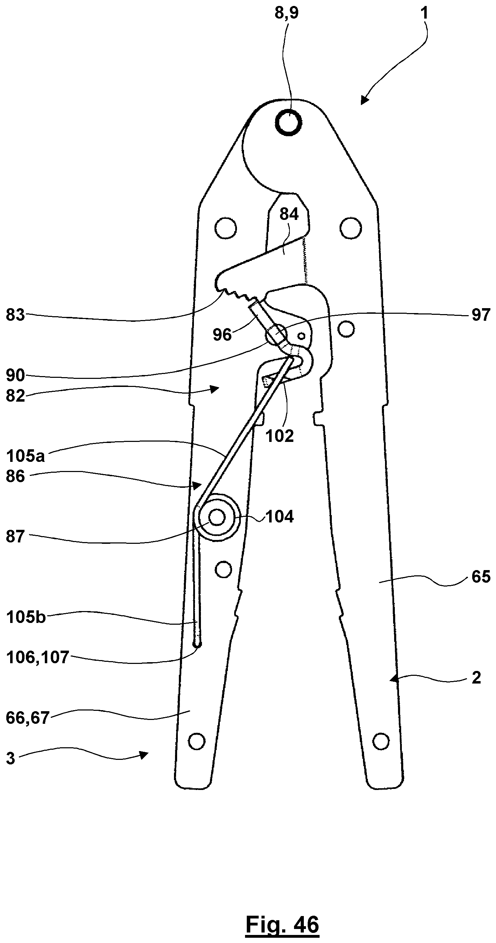

**Fig. 46** zeigt die Sperrklinke 85 in der Sicherungsstellung. Zu erkennen ist hier, dass die schneidenartige Ausbildung der Begrenzung der Ausnehmung 102 der Sperrklinke 85 die Veränderung des relativen Winkels zwischen dem Schenkel 105a und der Sperrklinke 85 ermöglicht.

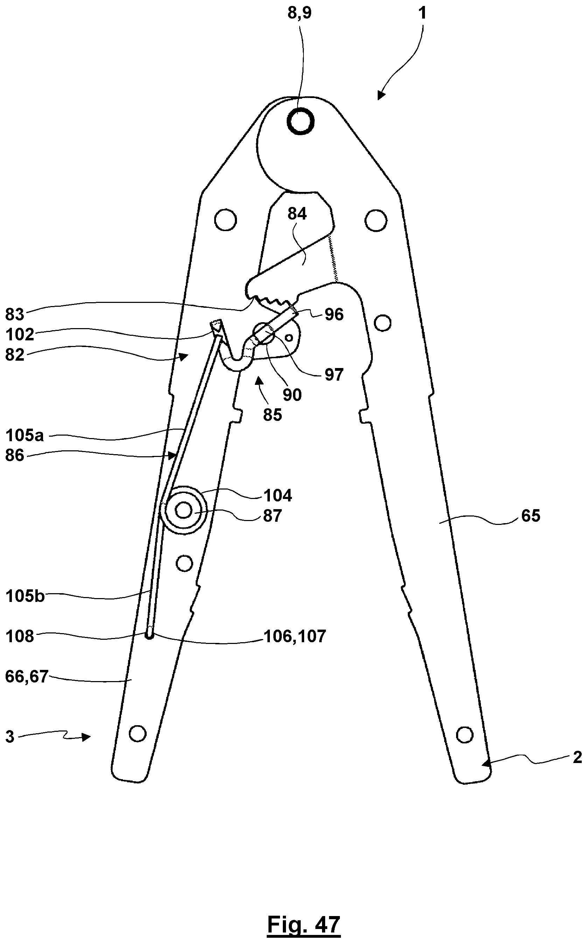

Hingegen zeigt **Fig. 47** das Zwangsgesperre 82 in der Freigabestellung. Auch hier ist (gerade noch) der Schenkel 105a der Schenkelfeder 103 in der Aufnahme 102 der Sperrklinke 85 angeordnet. Abweichend zu dem zuvor erläuterten Ausführungsbeispiel gemäß Fig. 40 bis 42 erfolgt hier die Beaufschlagung der Sperrklinke 85 für die Sicherungsstellung einerseits und die Freigabestellung andererseits in unterschiedliche Richtungen, so dass die Schenkelfeder 103, bezogen auf die Biegeachse derselben in der Sicherungsstellung einerseits und der Freigabestellung andererseits mit Biegemomenten beaufschlagt ist, die einen unterschiedlichen Richtungssinn aufweisen. Möglich ist aber auch, dass die Schenkelfeder 103 in der Freigabestellung [oder der Sicherungsstellung] eine minimale Beaufschlagung aufweist, die dann in Richtung der Sicherungsstellung [oder der Freigabestellung] größer wird.

Gemäß Fig. 47 ist die Schenkelfeder 103 so auf den Abstandshalter 87 gefügt, dass die Schenkel 105a, 105b die Wicklung 104 auf der Außenseite des Handhebels 3 verlassen.

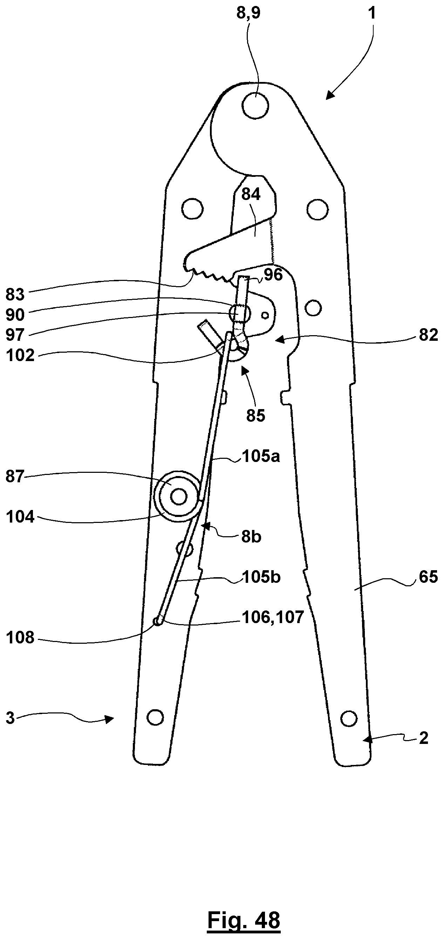

**Fig. 48** zeigt, dass alternativ auch möglich ist, dass eine andere Gestaltung und/oder Montage der Schenkelfeder 103 möglich ist, bei welcher die Schenkel 105a, 105b die Wicklung 104 auf der Innenseite des Handhebels 3 verlassen.

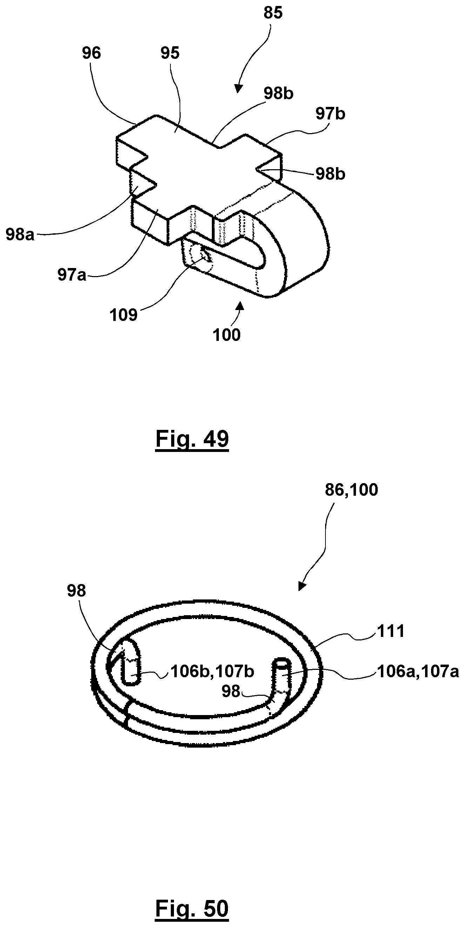

Für das in **Fig. 49** dargestellte Ausführungsbeispiel ist das Angriffsteil 100 der Sperrklinke 85 U-förmig umgebogen, so dass sich ein Endbereich des Angriffsteils 100 parallel zu dem Grundkörper 95 erstreckt. Für dieses Ausführungsbeispiel verfügt die Sperrklinke 85 über eine laterale Bohrung oder Aufnahme 109, die sich parallel zur Erstreckungsebene des Metallbleches in diesem Endbereich erstreckt.

**Fig. 50** zeigt eine Ausgestaltung der Feder 86 als Kreisfeder 110 aus einem Federdraht. Für das dargestellte Ausführungsbeispiel beträgt ein Wickelwinkel einer Wicklung 111 der Kreisfeder 110 bspw. 540°. Die Endbereiche der Kreisfeder 110 gehen über Abwinklungen 106a, 106b über in Fortsätze 107a, 107b, wobei die Fortsätze 107a, 107b parallel zueinander orientiert sind mit zueinander entgegengesetztem Richtungssinn.

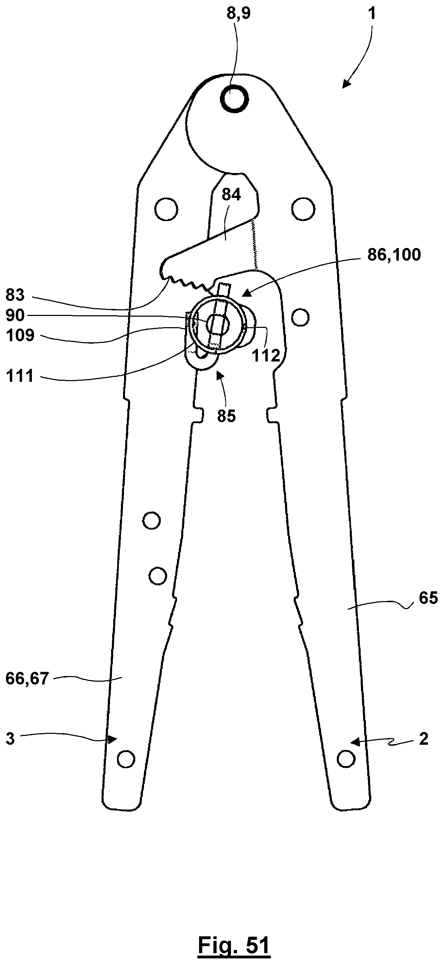

**Fig. 51** zeigt die teilmontierte oder teilgeschnittene Zangenbetätigungsbaugruppe 1 mit der Sperrklinke 85 gemäß Fig. 49 und der Feder 86 gemäß Fig. 50. Zu erkennen ist hier, dass sich die Kreisfeder 110 mit ihrer Haupterstreckungsebene parallel zur Schwenkebene der Handhebel 2, 3 erstreckt. Ein Fortsatz 107 ist aufgenommen in der Aufnahme 109 der Sperrklinke 85, während der andere Fortsatz 107 aufgenommen ist in einer Aufnahme 112 der Handhebelplatte 66, 67.

### BEZUGSZEICHENLISTE

- 1: Zangenbetätigungsbaugruppe
- 2: Handhebel
- 3: Handhebel
- 4: Handhebelplatte
- 5: Handhebelplatte
- 6: Lagerauge
- 7: Lagerauge
- 8: Schwenkbolzen
- 9: Schwenklager
- 10: Kröpfung
- 11: Kröpfung
- 12: Aufnahme
- 13: Aufnahme
- 14: Fortsatz
- 15: Fortsatz
- 16: Zuglasche
- 17: Zuglasche
- 18: Schwenklager
- 19: Schwenklager
- 20: Grundkörper
- 21: Grundkörper
- 22: Kopplungselement
- 23: Kopplungselement
- 24: Kopplungselementteil
- 25: Kopplungselementteil
- 26: Kopplungszapfen
- 27: Kopplungszapfen
- 28: Erweiterung
- 29: Erweiterung
- 30: Griff
- 31: Griff
- 32: Zangenkopf
- 33: Zangenkopfrahmen
- 34: Rahmenplatte
- 35: feste Gesenkhälfte
- 36: Niet
- 37: bewegliche Gesenkhälfte
- 38: Crimp- oder Pressachse
- 39: Ausnehmung
- 40: Ausnehmung
- 41: Schwenkbolzen-Aufnahme
- 42: Ausnehmung
- 43: Federeinrichtung
- 44: Feder
- 45: Kopplungsausnehmung
- 46: Kopplungsausnehmung
- 47: Kopplungsausnehmungsteil
- 48: Kopplungsausnehmungsteil
- 49: Langloch
- 50: spitzer Winkel
- 51: Zwischenraum
- 52: Zange
- 53: Kontaktfläche
- 54: Kontaktfläche
- 55: spitzer Winkel
- 56: Tellerkörper
- 57: Betätigungselement
- 58: Kopplungsbolzen
- 59: Kopplungsbolzen
- 60: Aufnahme
- 61: Schwenkbolzen
- 62: Bohrung
- 63: Kopplungseinrichtung
- 64: erste Handhebelplatte
- 65: zweite Handhebelplatte
- 66: dritte Handhebelplatte
- 67: vierte Handhebelplatte
- 68: Ausnehmung
- 69: Langloch
- 70: Anschlag
- 71: Halte- und/oder Führungsbohrung
- 72: Anschlagteil
- 73: erster Längsabschnitt
- 74: zweiter Längsabschnitt
- 75: Absatz
- 76: Kreisringfläche
- 77: Abstützfläche
- 78: erster Längsabschnitt
- 79: zweiter Längsabschnitt
- 80: Absatz
- 81: Kreisringfläche
- 82: Zwangsgesperre
- 83: Verzahnung
- 84: Fortsatz
- 85: Sperrklinke
- 86: Feder
- 87: Abstandshalter
- 88: Aufnahme
- 89: Fortsatz
- 90: Aufnahme
- 91: Blattfeder
- 92: Fortsatz
- 93: Aufnahme
- 94: Hülse
- 95: Grundkörper
- 96: Eingriffsteil
- 97: Fortsatz
- 98: Absatz
- 99: Entriegelungsteil
- 100: Angriffsteil
- 101: Umklappschräge
- 102: Ausnehmung
- 103: Schenkelfeder
- 104: Wicklung
- 105: Schenkel
- 106: Abwinklung
- 107: Fortsatz
- 108: Aufnahme
- 109: Aufnahme
- 110: Kreisfeder
- 111: Wicklung
- 112: Aufnahme

## Patentansprüche

1. Verfahren zur Montage einer Zangenbetätigungsbaugruppe (1), welche zur Bildung einer Zange (52) derart mit einem Zangenkopf (32) koppelbar ist, dass mittels einer manuellen Betätigung der Zangenbetätigungsbaugruppe (1) ein Hub von Gesenkhälften (35, 37) des Zangenkopfes (32) herbeiführbar ist, mit
- zwei Handhebeln (2, 3), wobei ein Handhebel (2) zwei Handhebelplatten (64, 65, 66, 67) aufweist, die starr miteinander verbunden sind,
- einem Schwenkbolzen (8), über den die Handhebel (2, 3) verschwenkbar miteinander verbunden sind,
- wobei eine Sperrklinke (85) eines Zwangsgesperres und/oder eine Feder (86) eines Zwangsgesperres, die eine Sperrklinke (85) des Zwangsgesperres beaufschlagt, und/oder mindestens eine Zuglasche (16, 17) Absätze (98) und den Absätzen (98) vorgeordnete Fortsätze (14, 15; 92; 97; 107) aufweisen/aufweist,
**gekennzeichnet durch die folgenden Verfahrensschritte:**
a) Fügen der Sperrklinke (85) und/oder der Feder (86) und/oder der Zuglasche (16, 17) in eine Fügerichtung in eine Handhebelplatte (64; 65; 66; 67), womit ein Fortsatz (14, 15; 92; 97; 107) der Sperrklinke (85) und/oder der Feder (86) und/oder der Zuglasche (16, 17) in eine Aufnahme (12, 13; 90; 93; 108; 109; 112) der Handhebelplatte (64, 65, 66, 67) eintreten/eintritt und ein Absatz (98) der Sperrklinke (85) und/oder der Feder (86) und/oder der Zuglasche (16, 17) in die Fügerichtung zur Anlage an die Handhebelplatte (64, 65, 66, 67) kommen/kommt oder benachbart hierzu angeordnet ist, und
b) Fügen der anderen Handhebelplatte (64, 65, 66, 67) in die Fügerichtung auf die Sperrklinke (85) und/oder die Feder (86) und/oder die Zuglasche (16, 17), womit der andere Fortsatz (14, 15; 92; 97; 107) der Sperrklinke (85) und/oder der Feder (86) und/oder der Zuglasche (16, 17) in eine Aufnahme (12, 13; 90; 93; 108; 109; 112) der anderen Handhebelplatte (64, 65, 66, 67) eintreten/eintritt und ein Absatz (98) der Sperrklinke (85) und/oder der Feder (86) und/oder der Zuglasche (16, 17) zur Anlage an die andere Handhebelplatte (64, 65, 66, 67) kommen/kommt oder benachbart hierzu angeordnet ist, und
c) Fixieren der Relativlage der Handhebelplatten (64, 65, 66, 67),
d) womit die Absätze (98) der Sperrklinke (85) und/oder der Feder (86) und/oder der Zuglasche (16, 17) zwischen den Handhebelplatten (64, 65, 66, 67) gefangen sind/ist und die Sperrklinke (85) und/oder die Feder (86) und/oder die Zuglasche (16, 17) gegenüber einer Demontage von den relativ zueinander fixierten Handhebelplatten (64, 65, 66, 67) gesichert ist/sind,
wobei die Feder (86) und/oder die Sperrklinke (85) und/oder die Zuglasche (16, 17) einstückig die Fortsätze (14, 15; 92; 97; 107) und die Absätze (98) ausbilden.

2. Verfahren nach Anspruch 1, **dadurch gekennzeichnet, dass** die Montage zumindest teilautomatisiert erfolgt.

3. Zangenbetätigungsbaugruppe (1), welche zur Bildung einer Zange (52) derart mit einem Zangenkopf (32) koppelbar ist, dass mittels einer manuellen Betätigung der Zangenbetätigungsbaugruppe (1) ein Hub von Gesenkhälften (35, 37) des Zangenkopfes (32) herbeiführbar ist, mit
- zwei Handhebeln (2, 3), wobei ein Handhebel (2) zwei Handhebelplatten (64, 65, 66, 67) aufweist, die starr miteinander verbunden sind,
- einem Schwenkbolzen (8), über den die Handhebel (2, 3) verschwenkbar miteinander verbunden sind,
- einem Zwangsgesperre (82), welches eine Teilschließstellung der Handhebel (2, 3) gegenüber einer Öffnungsbewegung sichert und eine Öffnungsbewegung erst mit dem Erreichen einer Schließstellung der Handhebel (2, 3) ermöglicht, wobei das Zwangsgesperre (82) eine an einem Handhebel (2) verschwenkbar gelagerte Sperrklinke (85) und eine mit einem Federfußpunkt an dem Handhebel (2) abgestützte und die Sperrklinke (85) beaufschlagende Feder (86) aufweist,
- wobei die Sperrklinke (85) und/oder die Feder (86) und/oder mindestens eine Zuglasche (16, 17) einen Absatz (98) und einen dem Absatz (98) vorgeordneten Fortsatz (14, 15; 92; 97; 107) aufweisen/aufweist und der Fortsatz (14, 15; 92; 97; 107) in einer Aufnahme (12, 13; 90; 93; 108; 112) einer Handhebelplatte (64, 65, 66, 67) abgestützt ist und der Absatz (98) an der Handhebelplatte (64, 65, 66, 67) abgestützt ist,
**wobei**
- die Zangenbetätigungsbaugruppe (1) mit einem Verfahren nach einem der Ansprüche 1 bis 2 montiert ist,
- die Sperrklinke (85) und/oder die Feder (86) und/oder die Zuglasche (16, 17) mit dem Absatz (98) und dem Fortsatz (14, 15; 92; 97; 107) einstückig ausgebildet sind/ist und
- der Querschnitt der Aufnahme (12, 13; 90; 93; 108; 112) der Handhebelplatte (64, 65, 66, 67), in der der Fortsatz (14, 15; 92; 97; 107) abgestützt ist, randgeschlossen ist.

4. Zangenbetätigungsbaugruppe (1) nach Anspruch 3, **dadurch gekennzeichnet, dass**
a) die Sperrklinke (85) und/oder die Feder (86) und/oder eine Zuglasche (16, 17) Absätze (98) und den Absätzen (98) vorgeordnete Fortsätze (14, 15; 92; 97; 107) aufweisen/aufweist,
b) die Fortsätze (14, 15; 92; 97; 107) in Aufnahmen (12, 13; 90; 93; 108; 112) der Handhebelplatten (64, 65, 66, 67) abgestützt sind,
c) die Sperrklinke (85) und/oder die Feder (86) und/oder die Zuglasche (16, 17) mit den Absätzen (98) und den Fortsätzen (14, 15; 92; 97; 107) einstückig ausgebildet sind/ist und
d) die Absätze (98) der Sperrklinke (85) und/oder der Feder (86) und/oder der Zuglasche (16, 17) zwischen den Handhebelplatten (64, 65, 66, 67) gefangen sind/ist, so dass die Sperrklinke (85) und/oder die Feder (86) und/oder die Zuglasche (16, 17) gegenüber einer Demontage von den relativ zueinander fixierten Handhebelplatten (64, 65, 66, 67) gesichert ist/sind.

5. Zangenbetätigungsbaugruppe (1) nach Anspruch 3 oder 4, **dadurch gekennzeichnet, dass** die Sperrklinke (85) ein gebogenes Blechteil ist, wobei das Blechteil insbesondere die Absätze (98) und Fortsätze (97), ein Eingriffsteil (96) für eine Verzahnung (83) des Zwangsgesperres (82) und ein Angriffsteil (100) für die Feder (86) ausbildet.

6. Zangenbetätigungsbaugruppe (1) nach Anspruch 4 oder Anspruch 5 in Rückbeziehung auf Anspruch 4, **dadurch gekennzeichnet, dass** die Feder (86) ein T-förmiges Federblech ist, wobei der Vertikalschenkel des T eine Blattfeder (91) bildet und die Horizontalschenkel des T die Fortsätze (92) ausbilden und die Übergänge von dem Vertikalschenkel zu den Horizontalschenkeln des T die Absätze (98) ausbilden.

7. Zangenbetätigungsbaugruppe (1) nach Anspruch 3, **dadurch gekennzeichnet, dass** die Feder eine Schenkelfeder, Spiral- oder Kreisfeder (103; 110) ist, die zwei Schenkel (105a, 105b) oder Endbereiche aufweist, wobei
a) ein Schenkel (105b) oder Endbereich eine endseitige Abwinklung (106) aufweist, die parallel zu einer Biegeachse der Schenkelfeder, Spiral- oder Kreisfeder (103; 110) orientiert ist und den Fortsatz (107) bildet, der in einer Aufnahme (108; 109; 112) einer Handhebelplatte (66, 67) aufgenommen ist, und
b) der andere Schenkel (105a) oder Endbereich die Sperrklinke (85) beaufschlagt.

8. Zangenbetätigungsbaugruppe (1) nach Anspruch 7, **dadurch gekennzeichnet, dass** der andere Schenkel (105a) oder Endbereich eine endseitige Abwinklung (106) aufweist, die parallel zur Biegeachse der Schenkelfeder, Spiral- oder Kreisfeder (103; 110) orientiert ist und einen Fortsatz (107) bildet, der in eine Aufnahme (108; 109; 112) der Sperrklinke (85) eingreift.

9. Zangenbetätigungsbaugruppe (1) nach einem der Ansprüche 3 bis 8, **dadurch gekennzeichnet, dass** die Sperrklinke (85)
a) eine Sicherungsstellung aufweist, in der diese während einer Schließbewegung der Handhebel (2, 3) ratschenartig entlang einer Verzahnung (83) des Zwangsgesperres (82) gleiten kann, aber eine Öffnungsbewegung der Handhebel (2, 3) blockiert,
b) eine Freigabestellung aufweist, in der diese während einer Öffnungsbewegung der Handhebel (2, 3) ratschenartig entlang der Verzahnung (83) des Zwangsgesperres (82) gleiten kann,
wobei die Feder (86) derart mit der Sperrklinke (85) gekoppelt ist, dass die Beaufschlagung der Feder (86) in einer Stellung zwischen der Sicherungsstellung und der Freigabestellung ein Minimum hat.

10. Zange (52) mit einer Zangenbetätigungsbaugruppe (1) nach einem der Ansprüche 3 bis 9 und mit einem Zangenkopf (32), wobei die Zangenbetätigungsbaugruppe (1) derart mit dem Zangenkopf (32) gekoppelt ist, dass mittels einer manuellen Betätigung der Zangenbetätigungsbaugruppe (1) ein Hub von Gesenkhälften (35, 37) des Zangenkopfes (32) herbeiführbar ist.

## Claims

1. Method of assembling a pliers actuation assembly (1) which is couplable to a pliers head (32) for providing pliers (52) in a way such that by means of a manual actuation of the pliers actuation assembly (1) a stroke of die halves (35, 37) of the pliers head (32) can be induced, with
- two hand levers (2, 3), wherein one hand lever (2) comprises two hand lever plates (64, 65, 66, 67) which are rigidly connected to each other,
- a pivot bolt (8) by which the hand levers (2, 3) are connected to one another for being pivoted,
- wherein a locking pawl (85) of a forced locking mechanism and/or a spring (86) of a forced locking mechanism which biases a locking pawl (85) of the forced locking mechanism and/or a pulling bar (16, 17) comprise/comprises shoulders (98) and protrusions (14; 15, 92, 97, 107) arranged in front of the shoulders (98),
**characterised by the following method steps:**
a) joining the locking pawl (85) and/or the spring (86) and/or the pulling bar (16, 17) in a joining direction into one hand lever plate (64; 65; 66; 67), whereby a protrusion (14, 15; 92; 97; 107) of the locking pawl (85) and/or of the spring (86) and/or of the pulling bar (16, 17) enter/enters into an accommodation (12, 13; 90; 93; 108; 109; 112) of the hand lever plate (64, 65, 66, 67) and a shoulder (98) of the locking pawl (85) and/or of the spring (86) and/or of the pulling bar (16, 17) establish/establishes a contact with the hand lever plate (64, 65, 66, 67) in joining direction or is arranged adjacent thereto, and
b) joining the other hand lever plate (64, 65, 66, 67) in the joining direction onto the locking pawl (85) and/or the spring (86) and/or the pulling bar (16, 17), whereby the other protrusion (14, 15; 92; 97; 107) of the locking pawl (85) and/or of the spring (86) and/or of the pulling bar (16, 17) enter/enters into an accommodation (12, 13; 90; 93; 108; 109; 112) of the other hand lever plate (64, 65, 66, 67) and a shoulder (98) of the locking pawl (85) and/or of the spring (86) and/or of the pulling bar (16, 17) establish/establishes a contact with the other hand lever plate (64, 65, 66, 67) or is arranged adjacent thereto and
c) fixing the relative position of the hand lever plates (64, 65, 66, 67),
d) the shoulders (98) of the locking pawl (85) and/or of the spring (86) and/or of the pulling bar (16, 17) being trapped between the hand lever plates (64, 65, 66, 67) and the locking pawl (85) and/or the spring (86) and/or the pulling bar (16, 17) being secured against a disassembly from the hand lever plates (64, 65, 66, 67) fixed relative to one another,
wherein the spring (86) and/or the locking pawl (85) and/or the pulling bar (16, 17) integrally form the protrusions (14, 15; 92; 97; 107) and the shoulders (98).

2. Method of claim 1, **characterized in that** the assembly is performed at least partially automatically.

3. Pliers actuation assembly (1), which can be coupled to a pliers head (32) for providing pliers (52) in a way such that by means of a manual actuation of the pliers actuation assembly (1) it is possible to induce a stroke of die halves (35, 37) of the pliers head (32), the pliers actuation assembly (1) comprising
- two hand levers (2, 3), wherein one hand lever (2) comprises two hand lever plates (64, 65, 66, 67) which are rigidly connected to each other,
- a pivot boult (8), by which the hand levers (2, 3) are connected to each other for being pivoted,
- a force locking mechanism (82), which secures a partially closed position of the hand levers (2, 3) against an opening movement and only allows an opening movement when a closed position of the hand levers (2, 3) is reached, wherein the forced locking mechanism (82) comprises a locking pawl (85) supported for being pivoted on a hand lever (2) and a spring (86) which is supported with one spring base on the hand lever (2) and biases the locking pawl (85),
- wherein the locking pawl (85) and/or the spring (86) and/or at least one pulling bar (16, 17) comprise/comprises a shoulder (98) and a protrusion (14, 15; 92; 97; 107) arranged in front of the shoulder (98) and the protrusion (14, 15; 92; 97; 107) is supported in an accommodation (12, 13; 90; 93; 108; 112) of one hand lever plate (64, 65, 66, 67) and the shoulder (98) is supported on the hand lever plate (64, 65, 66, 67),
**wherein**
- the pliers actuation assembly (1) is assembled by use of a method of one of claims 1 and 2,
- the locking pawl (85) and/or the spring (86) and/or the pulling bar (16, 17) are formed integrally with the shoulder (98) and the protrusion (14, 15; 92; 97; 107) and
- the cross section of the accommodation (12, 13; 90; 93; 108; 112) of the hand lever plate (64, 65, 66, 67), in which the protrusion (14, 15; 92; 97; 107) is supported, has a closed edge.

4. Pliers actuation assembly (1) of claim 3, **characterized in that**
a) the locking pawl (85) and/or the spring (86) and/or a pulling bar (16, 17) comprise/comprises shoulders (98) and protrusions (14, 15; 92; 97; 107) arranged in front of the shoulders (98),
b) the protrusions (14, 15; 92; 97; 107) are supported in accommodations (12, 13; 90; 93; 108; 112) of the hand lever plates (64, 65, 66, 67),
c) the locking pawl (85) and/or the spring (86) and/or the pulling bar (16, 17) are formed integrally with the shoulders (98) and the protrusions (14, 15; 92; 97; 107) and
d) the shoulders (98) of the locking pawl (85) and/or the spring (86) and/or the pulling bar (16, 17) is/are trapped between the hand lever plates (64, 65, 66, 67) so that the locking pawl (85) and/or the spring (86) and/or the pulling bar (16, 17) are/is secured against a disassembly from the hand lever plates (64, 65, 66, 67) which are fixed relative to each other.

5. Pliers actuation assembly (1) of claim 3 or 4, **characterized in that** the locking pawl (85) is a bent metal sheet, wherein the metal sheet in particular forms the shoulders (98) and protrusions (97), an engaging part (96) for a toothing (83) of the forced locking mechanism (82) and an attacking or contacting part (100) for the spring (86).

6. Pliers actuation assembly (1) of claim 4 or of claim 5 when referring back to claim 4, **characterized in that** the spring (86) is a T-shaped metal spring sheet, wherein a vertical leg of the T forms a leaf spring (91) and the horizontal legs of the T form the protrusions (92) and the transitions of the vertical leg to the horizontal legs of the T form the shoulders (98).

7. Pliers actuation assembly (1) of claim 3, **characterized in that** the spring is a leg spring, spiral spring or circular spring (103; 110) which comprises two legs (105a, 105b) or end sections, wherein
a) one leg (105b) or end section comprises an end sided angled section (106) which has an orientation parallel to a bending axis of the leg spring, spiral spring or circular spring (103; 110) and forms the protrusion (107) which is accommodated in an accommodation (108; 109; 112) of a hand lever plate (66, 67) and
b) the other leg (105a) or end section biases the locking pawl (85).

8. Pliers actuation assembly (1) of claim 7, **characterized in that** the other leg (105a) or end section comprises an end sided angled section (106) which has an orientation parallel to the bending axis of the leg spring, spiral spring or circular spring (103; 110) and forms a protrusion (107) which engages into an accommodation (108; 109; 112) of the locking pawl (85).

9. Pliers actuation assembly (1) of one of claims 3 to 8, **characterized in that** the locking pawl (85)
a) comprises a securing position in which the locking pawl (85) is able to slide in a ratchetlike manner along a toothing (83) of the forced locking mechanism (82) during a closing movement of the hand levers (2, 3) but blocks an opening movement of the hand levers (2, 3),
b) comprises a released position in which the locking paws (85) is able to slide in a ratchetlike manner along the toothing (83) of the forced locking mechanism (82) during an open movement of the hand levers (2, 3),
the spring (86) being coupled to the locking pawl (85) in a way such that the bias of the spring (86) has a minimum in a position between the securing position and the release position.

10. Pliers (52) comprising a pliers actuation assembly (1) of one of claims 3 to 9 and a pliers head (32), the pliers actuation assembly (1) being coupled to the pliers head in a way such that by means of an manual actuation of the pliers actuation assembly (1) a stroke of die halves (35, 37) of the pliers head (32) can be induced.

## Revendications

1. Procédé pour monter un ensemble d'actionnement de pince (1) qui peut être couplé à une tête de pince (32) pour former une pince (52) de telle sorte qu'un hub de demi-matrices (35, 37) de la tête de pince (32) peut être actionné par une action manuelle sur l'ensemble d'actionnement de pince (1) avec
deux leviers manuels (2, 3), un levier manuel (2) présentant deux plaques de levier manuel (64, 65, 66, 67) reliées entre elles de manière rigide,
un axe de pivotement (8) par l'intermédiaire duquel les leviers manuels (2, 3) sont reliés entre eux de manière pivotante,
dans lequel un cliquet d'arrêt (85) d'un dispositif de verrouillage forcé et/ou un ressort (86) d'un dispositif de verrouillage forcé, qui sollicite un cliquet d'arrêt (85) du dispositif de verrouillage forcé, et/ou au moins une languette de traction (16, 17) présentent des ergots (98) et des prolongements (14 ; 15 ; 92 ; 97 ; 107) disposés devant les ergots (98),
**caractérisé par les étapes de procédé suivantes** :
a) Insertion du cliquet d'arrêt (85) et/ou du ressort (86) et/ou de la languette de traction (16, 17) dans une direction d'insertion dans une plaque de levier manuel (64 ; 65 ; 66 ; 67), un prolongement (14, 15 ; 92 ; 97 ; 107) du cliquet d'arrêt (85) et/ou du ressort (86) et/ou de la languette de traction (16, 17) pénétrant dans un logement (12, 13 ; 90 ; 93 ; 108 ; 109 ; 112) de la plaque de levier manuel (64, 65, 66, 67) et un ergot (98) du cliquet d'arrêt (85) et/ou du ressort (86) et/ou de la languette de traction (16, 17) venant, dans la direction de guidage, en appui contre la plaque de levier manuel (64, 65, 66, 67) ou étant agencé(s) à proximité de celle-ci et
b) Insertion de l'autre plaque de levier manuel (64, 65, 66, 67) dans le sens de guidage sur le cliquet d'arrêt (85) et/ou le ressort (86) et/ou la languette de traction (16, 17), de sorte que l'autre prolongement (14, 15 ; 92 ; 97 ; 107) du cliquet d'arrêt (85) et/ou du ressort (86) et/ou de la languette de traction (16, 17) pénètrent dans un logement (12, 13 ; 90 ; 93 ; 108 ; 109 ; 112) de l'autre plaque de levier manuel (64, 65, 66, 67) et un ergot (98) du cliquet d'arrêt (85) et/ou du ressort (86) et/ou de la languette de traction (16, 17) viennent en appui contre l'autre plaque de levier manuel (64, 65, 66, 67) ou sont agencés à proximité de celle-ci, et
c) fixation de la position relative des plaques de levier manuel (64, 65, 66, 67),
d) les ergots (98) du cliquet d'arrêt (85) et/ou du ressort (86) et/ou de la languette de traction (16, 17) étant ainsi pris entre les plaques de levier manuel (64, 65, 66, 67) et le cliquet d'arrêt (85) et/ou le ressort (86) et/ou la languette de traction (16, 17) étant protégés contre tout démontage des plaques de levier manuel (64, 65, 66, 67) fixées les unes par rapport aux autres,
le ressort (86) et/ou le cliquet d'arrêt (85) et/ou la languette de traction (16, 17) formant d'un seul tenant les prolongements (14, 15 ; 92 ; 97 ; 107) et les ergots (98).

2. Procédé selon la revendication 1, **caractérisé en ce que** le montage est au moins partiellement automatisé.

3. Ensemble d'actionnement de pince (1) qui peut être couplé à une tête de pince (32) de manière à former une pince (52), de telle sorte qu'un hub de demi-matrices (35, 37) de la tête de pince (32) peut être actionné par une action manuelle sur l'ensemble d'actionnement de pince (1), avec
- deux leviers manuels (2, 3), un levier manuel (2) présentant deux plaques de levier manuel (64, 65, 66, 67) reliées entre elles de manière rigide,
- un axe de pivotement (8) par l'intermédiaire duquel les leviers manuels (2, 3) sont reliés entre eux de manière pivotante,
- un dispositif de verrouillage forcé (82) qui empêche toute fermeture partielle des leviers manuels (2, 3) par rapport à un mouvement d'ouverture et qui ne permet le mouvement d'ouverture qu'une fois que les leviers manuels (2, 3) ont atteint une position de fermeture, le dispositif de verrouillage forcé (82) présentant un cliquet d'arrêt (85) monté de manière pivotante sur un levier manuel (2) et un ressort (86) prenant appui par un pied sur le levier manuel (2) et sollicitant le cliquet d'arrêt (85),
- le cliquet d'arrêt (85) et/ou le ressort (86) et/ou au moins une languette de traction (16, 17) présentant un ergot (98) et un prolongement (14, 15 ; 92 ; 97 ; 107) agencé devant l'ergot (98) et le prolongement (14, 15 ; 92 ; 97 ; 107) prenant appui dans un logement (12, 13 ; 90 ; 93 ; 108 ; 112) d'une plaque de levier manuel (64, 65, 66, 67) et l'ergot (98) prenant appui sur la plaque de levier manuel (64, 65, 66, 67),
**dans lequel**
- l'ensemble d'actionnement de pince (1) est monté selon l'un des procédés visés par les revendications 1 à 2,
- le cliquet d'arrêt (85) et/ou le ressort (86) et/ou la languette de traction (16, 17) sont réalisés d'un seul tenant avec l'ergot (98) et le prolongement (14, 15 ; 92 ; 97 ; 107) et
- la section transversale du logement (12, 13 ; 90 ; 93 ; 108 ; 112) de la plaque de levier manuel (64, 65, 66, 67), dans laquelle le prolongement (14, 15 ; 92 ; 97 ; 107) prend appui, est fermée sur les bords.

4. Ensemble d'actionnement de pince (1) selon la revendication 3, **caractérisé en ce que**
a) le cliquet d'arrêt (85) et/ou le ressort (86) et/ou une languette de traction (16, 17) présentent des ergots (98) et des prolongements (14, 15 ; 92 ; 97 ; 107) agencés devant les ergots (98),
b) les prolongements (14, 15 ; 92 ; 97 ; 107) prennent appui dans des logements (12, 13 ; 90 ; 93 ; 108 ; 112) des plaques de levier manuel (64, 65, 66, 67),
c) le cliquet d'arrêt (85) et/ou le ressort (86) et/ou la languette de traction (16, 17) sont réalisés d'un seul tenant avec les ergots (98) et les prolongements (14, 15 ; 92 ; 97 ; 107) et
d) les ergots (98) du cliquet d'arrêt (85) et/ou du ressort (86) et/ou de la languette de traction (16, 17) sont pris entre les plaques de levier manuel (64, 65, 66, 67), de sorte que le cliquet d'arrêt (85) et/ou le ressort (86) et/ou la languette de traction (16, 17) sont protégés contre tout démontage des plaques de levier manuel (64, 65, 66, 67) fixées les unes par rapport aux autres.

5. Ensemble d'actionnement de pince (1) selon la revendication 3 ou 4, **caractérisé en ce que** le cliquet d'arrêt (85) est une partie en tôle pliée, la partie en tôle formant en particulier les ergots (98) et les prolongements (97), une partie d'engagement (96) pour une denture (83) du dispositif de verrouillage forcé (82) et une partie d'accrochage (100) pour le ressort (86).

6. Ensemble d'actionnement de pince (1) selon la revendication 4 ou la revendication 5 en référence à la revendication 4, **caractérisé en ce que** le ressort (86) est une tôle à ressort en forme de T, la branche verticale du T formant un ressort à lame (91) et les branches horizontales du T formant les prolongements (92) et les transitions entre la branche verticale et les branches horizontales du T formant les ergots (98).

7. Ensemble d'actionnement de pince (1) selon la revendication 3, **caractérisé en ce que en ce que** le ressort est un ressort à branches, un ressort à spirale ou un ressort circulaire (103 ; 110) qui présente deux branches (105a, 105b) ou zones d'extrémité, dans lequel
a) une branche (105b) ou une zone d'extrémité présente un coude d'extrémité (106) qui est orienté parallèlement à un axe de flexion du ressort à branches, du ressort à spirale ou du ressort circulaire (103 ; 110) et forme le prolongement (107) qui est logé dans un logement (108 ; 109 ; 112) d'une plaque de levier manuel (66, 67), et
b) l'autre branche (105a) ou zone d'extrémité sollicite le cliquet d'arrêt (85).

8. Ensemble d'actionnement de pince (1) selon la revendication 7, **caractérisé en ce que** l'autre branche (105a) ou zone d'extrémité présente un coude d'extrémité (106) qui est orienté parallèlement à l'axe de flexion du ressort à branche, du ressort à spirale ou du ressort circulaire (103 ; 110) et forme un prolongement (107) qui s'engage dans un logement (108 ; 109 ; 112) du cliquet d'arrêt (85).

9. Ensemble d'actionnement de pince (1) selon l'une des revendications 3 à 8,
**caractérisé en ce que** le cliquet d'arrêt (85)
a) présente une position de sécurité dans laquelle il peut coulisser à la manière d'un cliquet le long d'une denture (83) du dispositif de verrouillage forcé (82) pendant un mouvement de fermeture des leviers manuels (2, 3), mais bloque un mouvement d'ouverture des leviers manuels (2, 3),
b) présente une position de déblocage dans laquelle il peut coulisser à la manière d'un cliquet le long de la denture (83) du dispositif de verrouillage forcé (82) pendant un mouvement d'ouverture des leviers manuels (2, 3),
le ressort (86) étant couplé au cliquet d'arrêt (85) de telle sorte que la sollicitation du ressort (86) est minimale dans une position située entre la position de sécurité et la position de déblocage.

10. Pince (52) avec un ensemble d'actionnement de pince (1) selon l'une des revendications 3 à 9 et avec une tête de pince (32), l'ensemble d'actionnement de pince (1) étant couplé à la tête de pince (32) de telle sorte qu'un hub de demi-matrices (35, 37) de la tête de pince (32) peut être actionné par une action manuelle sur l'ensemble d'actionnement de pince (1).
